# EUROPEAN PATENT SPECIFICATION

(11) **EP 4 378 887 B1**
(45) Date of publication and mention of the grant of the patent: **30.07.2025**
(21) Application number: 22383163.7
(22) Date of filing: 01.12.2022
(51) Int. Cl.: C01B 3/16, B01D 53/62, B01D 53/96, B01J 23/72, B01J 23/745, C01B 3/18, C01F 11/06, C01F 11/18, C10K 3/02, B01J 8/08, B01J 8/18, B01J 8/24, B01J 8/38

(54) **METHOD OF HYDROGENATION AND CALCINATION OF CACO3 WITH H2**
VERFAHREN ZUR HYDRIERUNG UND KALZINIERUNG VON CACO3 MIT H2
PROCÉDÉ D'HYDROGÉNATION ET DE CALCINATION DE CACO3 AVEC H2

(43) Date of publication of application: 05.06.2024
(73) Proprietor: Consejo Superior De Investigaciones Científicas, 28006 Madrid (ES)
(72) Inventor: ABANADES GARCIA, Juan Carlos, Madrid (ES); GRASA ADIEGO, Gemma Susana, Madrid (ES)
(74) Representative: Pons IP

(56) References cited:
- US-A1- 2017 096 335
- GIAMMARIA GUIDO ET AL: "Synergy between dielectric barrier discharge plasma and calcium oxide for reverse water gas shift", CHEMICAL ENGENEERING JOURNAL, ELSEVIER, AMSTERDAM, NL, vol. 392, 13 December 2019 (2019-12-13), XP086125401, ISSN: 1385-8947, [retrieved on 20191213], DOI: 10.1016/J.CEJ.2019.123806
- ALARCÓN JUANA MARÍA ET AL: "Study of a Cu-CuO chemical loop for the calcination of CaCO3in a fixed bed reactor", CHEMICAL ENGENEERING JOURNAL, ELSEVIER, AMSTERDAM, NL, vol. 325, 15 May 2017 (2017-05-15), pages 208 - 220, XP085053263, ISSN: 1385-8947, DOI: 10.1016/J.CEJ.2017.05.070
- ZHENSHAN LI ET AL: "Effect of CaO hydration and carbonation on the hydrogen production from sorption enhanced water gas shift reaction", INTERNATIONAL JOURNAL OF HYDROGEN ENERGY, ELSEVIER, AMSTERDAM, NL, vol. 37, no. 15, 30 April 2012 (2012-04-30), pages 11227 - 11236, XP028400348, ISSN: 0360-3199, [retrieved on 20120508], DOI: 10.1016/J.IJHYDENE.2012.04.160

## Description

### OBJECT OF THE INVENTION

This invention discloses a method of hydrogenation and calcination of CaCO₃ with H₂, to produce CaO and a gas containing at least H₂, CO, CO₂ and H₂O₍ᵥ₎. The method is characterized by repetitive cycles, each cycle including a combustion step to heat up the CaCO₃ containing solids to a temperature between 750-1100ºC followed by a step of adiabatic cooling of between 50-250ºC, caused by the hydrogenation and calcination of the CaCO₃ containing solids. The combustion step can be direct combustion of a fuel gas in air or O₂, or indirect combustion of the fuel gas using a chemical combustion loop of a metal such as Cu or Fe, chosen to enhance the catalytic properties of the Reverse Water Gas Shift reaction, RWGS. The source of CaCO₃ can be a natural mineral or come from a separate process of carbonation of CaO with a gas containing CO₂. Preferred embodiments of the method are described using moving bed, fixed bed, fluidised bed or entrained bed reactors. The methods can be adapted to operate at pressures between 0.1-50 atm, to manufacture a syngas with a H₂/CO ratio close to 2 and CO₂ volume fraction below 0.15.

### FIELD OF THE INVENTION

This is a process to manufacture a syngas from CaCO₃ and H₂. When the source of CaCO₃ is a natural limestone or other mineral containing CaCO₃ at ambient temperature, the process is applicable to shaft kilns, flash calciners or circulating fluidised bed calciners. When the source of CaCO₃ is a process involving a step of carbonation of CaO, the process is applicable to calcium looping processes to capture CO₂ from gases.

### BACKGROUND OF THE INVENTION

The future deployment of renewable electricity at large scale and low cost will make electrolytic H₂ also available at low cost. In this context, there is growing interest in the development of industrial processes to manufacture C-based synthetic fuels from CO₂ and H₂, "Power to Liquid" or PtL processes, preferably using renewable CO₂ (i.e., captured from the atmosphere or from biogenic sources) to have a "close to zero" carbon footprint. A recent review of current commercial PtL processes is given by V. Dieterich et al. (Power-to-liquid via synthesis of methanol, DME or Fischer-Tropsch-fuels: a review Energy Environ. Sci., 2020, 13, 3207). Current commercial PtL processes involve a step of reverse water gas shift, RWGS, to obtain a syngas containing CO, H₂, H₂O₍ᵥ₎ and some unconverted CO₂. Solid catalyst containing Cu or Fe are used to accelerate the RWGS reaction. There are strict purity requirements for the CO₂ feedstock fed to these PtL processes (see for example Table 7 in Dieterich et al.), usually because of the need to preserve the activity of the RWGS catalyst.

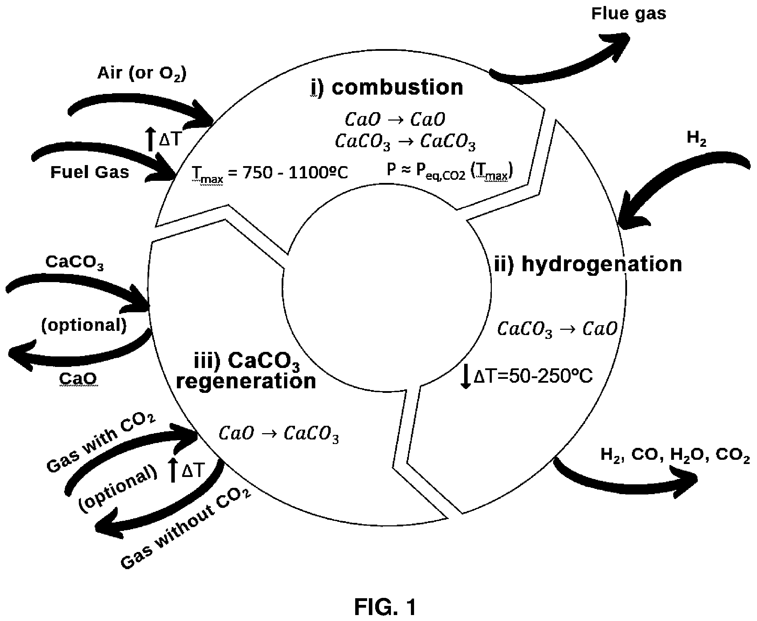

To overcome the need of high purity levels in the CO₂ feed to the PtL process, and to achieve more energy efficient and intensive processes, there is also substantial R&D in the development of direct routes of hydrogenation of metal carbonates (S. Lux, Hydrogenation of Inorganic Metal Carbonates: A Review on Its Potential for Carbon Dioxide Utilization and Emission Reduction. ChemSusChem 2018, 11, 3357- 3375). Background on the direct hydrogenation of CaCO₃ goes back to US3558724 (INORGANIC PROCESS FOR PRODUCING HYDROCARBON COMPOUNDS BY REACTION OF HYDROGEN AND CRYSTALLINE CARBONATES, 1968) that disclosed a batch hydrogenation method of CaCO₃, involving the heating up of CaCO₃ (to at least 200ºC) in a pressurised vessel to contact H₂ (at pressures up to 333 atm) during 2-8 hours and produce fuel gases (methane, ethane, propane etc). In a different publication, co-workers of the author (A.A. Giardini et al, Science 1968, Vol 159, 317-319) reported the formation of CO in similar experiments at 660ºC, with an overwhelming presence of H₂ (>99%v) in the gas mixture and a complete conversion of the small sample of CaCO₃ used in all the experiments. They also refer to additional experiments, not reported in US3558724, where the hydrogenation process of CaCO₃ was satisfactorily "carried out with hydrogen pressures only slightly above ambient. Thus, the hydrogen needs only to be at a pressure sufficient to insure intimate contact of the hydrogen gas with" CaCO₃. More recently, Lux et al stated that, "the admixture of transition metals to main-group metal carbonates opens up a new pathway in metal carbonate hydrogenation, because many transition metals are known to catalyze hydrogenation reactions, CO₂ evolved from the carbonate is converted into CO, CH₄, or directly to higher hydrocarbons CₓH_{y} and CₓH_{y}O_{z}". A. Reller et al. (Formation of organic carbon compounds from metal carbonates, Nature 1987, Vol 329, 527-529) first reported hydrogenation test with mixtures of CaCO₃ and transition metals, that seemed to act as catalyst of the hydrogenation reactions of CaCO₃ (with CO and CH₄ being the main hydrocarbons product). They observed that the calcination of CaCO₃ was taking place at comparably low temperatures, with this effect enhanced by the admixture at close to atomic level of transition metals with the CaCO₃. In a recent review of this phenomena by R. Han et al (Progress in reducing calcination reaction temperature of Calcium-Looping CO2 capture technology: A critical review. Chemical Engineering Journal 2022, 450, 137952) a wide range of dual functional materials, combining CaO as CO₂ sorbent and a transition metal as hydrogenation catalyst, are referred. Such DFM have promising properties to operate in a wide range of process concepts, as reviewed by S. Lux et al. (2018) noted above. These processes usually involve means to circulate solids between a carbonator (where CO₂ contained in a gas reacts with CaO to form CaCO₃) to a hydrogenator (where the CaCO₃ will react with H₂ to form CaO and a gas containing hydrocarbons). Alternatively, these processes have been proposed to operate following principles of pressure and/or temperature swing adsorption, alternating between carbonation and hydrogenation conditions in the same vessel (see for example Figure 1 in H. Sun et al.; Dual functional catalytic materials of Ni over Ce-modified CaO sorbents for integrated CO2 capture and conversion; Applied Catalysis B: Environmental; Volume 244, 5 May 2019, Pages 63-75).

Relevant for this invention is to note that Cu-based catalyst and Fe-based catalyst are within the list materials with catalytic properties for reverse water gas shift reactions. Also, that these Cu-based and Fe-based materials are known to have excellent properties as oxygen carrier materials in chemical looping combustion applications, where the metal oxides (CuO or FeO/Fe₃O₄/Fe₂O₃) can burn a fuel gas into CO₂ and H₂O while reducing to Cu or Fe or a lower oxidation form of the iron oxide. In a subsequent step, the metals or reduced forms of the iron oxides can be exothermically oxidised again in contact with air or other gas containing O₂. Also relevant for this invention are known systems that combine chemical looping combustion steps to provide the energy needed to drive CaCO₃ calcination steps in calcium looping processes, where carbonation of CaO occurs in contact with a gas containing CO₂ followed by the calcination of CaCO₃ to regenerate CaO and obtain pure CO₂. US8506915B2 discloses one of such systems, where the generation of CaO in the bed during the calcination step allows for a subsequent step of CaO-based Sorption Enhanced Reforming and CaO-based Sorption Enhanced Water Gas Shift reactions, to produce H₂ from C-fuels. Note that these enhanced reaction conditions as such as to promote the removal of CO₂ from the gas phase by carbonation of CaO to form CaCO₃ while undertaking reactions that generate water gas shift gases. Following Le Chatelier's principle, by removing CO₂ from the gas phase, the equilibrium of the water gas shift reaction of CO and water vapour, H₂Oᵥ, is displaced towards the formation of H₂. A more recent example of these system is the so called CASOH process, where a bed of solids containing CaO first removes the CO₂ contained in the BFG and promotes the enhanced water gas shift of the CO by capturing the resulting CO₂ as CaCO₃. In a subsequent step, CaO must be regenerated, burning a fuel gas with a chemical loop of Cu/CuO to produce CO₂ and water vapour (Fernandez et al. Advanced Packed-Bed Ca-Cu Looping Process for the CO2 Capture From Steel Mill Off-Gases, Frontiers in Energy Research 2020, July 2020 | Volume 8 | Article 146)

Most relevant for this invention, G. Giammaria and L. Lefferts (Synergy between dielectric barrier discharge plasma and calcium oxide for reverse water gas shift; Chemical Engineering Journal, Volume 392, 15 July 2020, 123806) have recently reported the catalytic effect of CaO particles in RWGS experiments ("the conversion approaches equilibrium for many experimental conditions in the presence of CaO"). They provide experimental evidence (see for example Figure A6 in their supplementary information material) of a sharp increase in CO concentration in the product gas when the CaCO₃ containing solids exceeded the calcination temperature (given by the equilibrium of CO₂ on CaO at the CO₂ partial pressure of the feed gas), consistent with a mechanism involving R1+R3 in their Scheme 1, at the temperatures tested. Their equation 2, using the parameters listed in their Table 1 as "CaO 0W" provides a useful kinetic equation to fit their experimental results of RWGS reaction in the presence of CaO as catalyst, when combined with known expressions in the state of the art for the equilibrium constant of CO₂ on CaO (for example with the equilibrium equation of Hills) or for the water gas shift, WGS, equilibrium (for example the equilibrium WGS equation of Twigg).

Despite the progress in the science of direct hydrogenation of CaCO₃ containing materials to CO and H₂Oᵥ, the recent confirmation of the role of CaO as a reverse water gas shift catalyst, and the availability of dual functional materials containing CaCO₃ and transition metals where the direct hydrogenation of CaCO₃ is shown to occur at lower temperatures than the calcination temperatures, there is lack of methods to undertake these processes at industrial scale. In particular, there is a need to solve with viable methods, and without emitting CO₂, the large energy requirements for the endothermic hydrogenation of CaCO₃ containing solids (note that considering an enthalpy of 170 kJ/mol for the endothermic calcination of CaCO₃ and a RWGS reaction enthalpy of 41 kJ/mol, the enthalpy of hydrogenation of CaCO₃ to CO and H₂O is about 211 kJ/mol). All reported hydrogenation experiments of CaCO₃ use small non-adiabatic set ups, where the sample solids are heated from a surrounding oven (usually an electric oven). This is not a practical solution for large scale systems designed to supply syngas to PtL processes because heat transfer by thermal conduction in a packed or moving bed of solids is very inefficient due to the low thermal conductivities typical in packed beds of solids. Indeed, combustion of a fuel within a bed of solids is the common practice to supply similar flows of thermal energy for similarly endothermic reactions (such as calcination of CaCO₃ containing solids). However, such methods of combustion would translate into unacceptable levels of flue gas emissions with CO₂ and the decomposition and loss of the CaCO₃ intended for use in direct hydrogenation reaction. It is therefore important for the development of hydrogenation processes of CaCO₃ at large scale to conceive methods to transfer the necessary heat from a combustion reaction to the hydrogenating CaCO₃ solids, while limiting, or virtually avoiding, the emissions of CO₂ to the atmosphere from the combustion or from the decomposition of CaCO₃ before hydrogenation takes place.

On the other hand, in view of the growing interest and demand for syngas with H₂/CO molar ratios close to 2 for commercial PtL processes, it is important to define methods that target the energy efficient production of such targeted syn-gas H₂/CO ratio close to 2, while achieving maximum product yields of CO and minimum contents of the CO₂ in the product gas (i.e., maximum CO₂ conversion in the reverse water gas shift reaction).

All referred papers and patents in the field of direct hydrogenation of CaCO₃ are silent on the previous important problems. As a result, no full-scale method for direct hydrogenation of CaCO₃ (i.e., providing a practical solution to the energy supply for the hydrogenation reaction while maintaining low or "close to zero" emissions of CO₂) has been disclosed. Indeed, large scale integrated processes for PtL using CaCO₃ as a source of carbon, still rely on the use of the concentrated CO₂ gas resulting from a prior calcination step of CaCO₃. For example, US8318112B2 relates to a system and process for producing liquid hydrocarbons from a calcium carbonate feed-stock involving in its first step the liberation of carbon dioxide gas by supplying heat to a CaCO₃ calciner. The high energy requirements in such step of endothermic calcination of CaCO₃ to produce CaO and concentrated, or even pure CO₂, has generated a variety of patented calcination methods in the state of the art. Several methods for such CaCO₃ calcination step involve the burning of a fuel gas in the vicinity of the calcining solids, using comburent mixtures of air enriched in O₂ or even N₂-free CO₂/O₂ mixtures. Such oxy-combustion CaCO₃ calcination systems have been developed and integrated in a range of cement manufacturing processes, lime shaft kilns and calcium looping processes (including post-combustion CO₂ capture processes and sorption enhanced reforming and water gas shift processes), involving moving bed, fluidised bed or entrained bed calcination technologies, but none of them have been conceived or are applicable under the reducing conditions in a reactor where hydrogenation of CaCO₃ with H₂ is taking place.

From the previous review of the state of the art, it can be concluded that there is still a need of a method to obtain syngas from CaCO₃ and H₂ solving the above-cited drawbacks.

### DESCRIPTION OF THE INVENTION

The main object of the present invention is to provide a method of hydrogenation and calcination of CaCO₃ with H₂, to produce CaO and a gas containing at least H₂, CO, CO₂ and H₂O₍ᵥ₎, wherein the CO₂ is released from the calcination of solids containing CaCO₃ when reacted with H₂. The syngas product will preferably have a H₂/CO molar ratio close to 2 to facilitate its use downstream in synthesis processes.

The method is applicable to processes for calcination of limestone that use thermally insulated vessels such as moving bed shaft kilns, fluidised beds or flash calciners with a continuous feed of limestone and a continuous discharge of lime. These thermally insulated vessel have at least one calcination section of the vessel, where the solids reach average calcination temperatures (typically higher for example than 900ºC in the calcination section of a lime shaft kiln). Preheating of the limestone before reaching the calcination zone and cooling of the lime before discharging it from the calciner are part of the state of the art to minimise energy requirements in calciners. The method is also applicable to calcium looping processes using thermally insulated vessels containing CaCO₃. In this case the CaCO₃ is formed during the capture of CO₂ by carbonation of CaO in contact with a combustion flue gas or with any other gas containing CO₂.

The present invention discloses a method of producing a syngas from CaCO₃ and H₂ wherein the calcination of CaCO₃ in carried out in a thermally insulated vessel by reacting it with H₂, to produce CaO and a syngas containing at least H₂, CO, H₂O and CO₂, characterised by a sequence of at least the following consecutive steps carried out at least twice:
i) a step of combustion of a fuel to heat up a bed of solids containing at least CaO and CaCO₃ to a maximum heating temperature between 700-1100ºC, at a pressure being essentially the equilibrium partial pressure of pure CO₂ on CaO at the maximum heating temperature. The maximum heating temperature, Tₘₐₓ, is preferably considered here as an average of the temperature reached by the solids in the thermally insulated vessel (or the calcination region of such vessel) where the combustion step i) takes place. The target in this first step is heating the solids close to Tₘₐₓ under conditions close to the equilibrium calcination temperature, in order to limit the calcination conversion (molar conversion of CaCO₃ to CaO) during such combustion step i). This is feasible for the calcination of limestone at industrial scale, because heating rates of the interior of particles or pebbles of CaCO₃ containing solids are typically much faster than calcination rates, in particular when such calcination rate is deliberately reduced by operating the calciner at a pressure "being essentially the equilibrium" partial pressure of CO₂ on CaO, which means in this context that the operating pressure must be such as to prevent the fast calcination of the solids at the targeted Tₘₐₓ, to moderate the release of CO₂ from CaCO₃ during this combustion step and prevent its emission in the flue gases emitted during such combustion step. For example, when choosing a maximum heating temperature of between 800-900ºC, the operating pressure will be a value close to the atmospheric pressure, since the calcination reaches fast reaction rates only over such temperatures, with said calcination rates controlled by the thermal power input of the burning process.

Once that Tₘₐₓ has been reached, the second step in the method of this invention ii) is a step of reacting with H₂ the heated bed of solids containing at least CaO and CaCO₃, while allowing their adiabatic cooling by 50 to 250ºC. As shown in dedicated experiments described below, reverse water gas shift of the CO₂ evolved from calcination of CaCO₃ will take place in these conditions, catalysed by the CaO that is generated from CaCO₃ calcination and/or the presence of a RWGS catalyst mixed with the CaCO₃ containing solids, such as Cu or Fe-based catalyst. Since the vessel has been chosen to be thermally insulated (i.e., close to adiabatic when the reactor has the scale of a lime kiln), the only energy available to drive the hydrogenation of CaCO₃ (requiring 211 kJ/mol) is the sensitive heat contained in the CaCO₃ containing solids, in the CaO and in any other solids (i.e., the RWGS catalyst) that may be in their proximity, after their heating up during step i). Adiabatic cooling of such solids will therefore take place, as the conversion of CaCO₃ to CaO progresses with time. The interval of temperatures allowed for this adiabatic cooling is between 50 to 250ºC. This has been defined after modelling the phenomena of "Desorption Enhanced Reverse Water Gas Shift", DERWaGS, which is the reverse of the known Ca-based Sorption Enhanced Water Gas Shift, as described in the detailed description below that follows Le Chatelier principles. As will be shown below, under the chosen reaction conditions, the DERWaGS phenomena cause a continuous fast release of CO₂ from the calcining CaCO₃ containing solids ensuring a steady supply of CO₂ to the local gas atmosphere of the calciner, where RWGS reaction is taking place. Such a steady concentration of CO₂ will be maintained by the excess of CaCO₃ in the vessel during this step, enhancing the formation of CO in the gas phase. Critically, as long as there is some excess of CaCO₃ in the vessel during step ii), certain operating windows disclosed in this patent application under DERWaGS conditions lead to higher concentration of CO than what would be expected from the RWGS equilibrium under the same temperature when fed with a H₂-rich gas with the same CO₂ partial pressure at the inlet that the equilibrium partial pressure of CO₂ on CaO at the same temperature. No other works in the state of the art have described the DERWaGS phenomena.

An adiabatic heat balance on the step ii), in the absence of input/outputs of energy other than those linked to the endothermic hydrogenation of CaCO₃ indicates that the cooling of 50-250ºC taking place during this CaCO₃ hydrogenation step will typically be linked to a decrease of 0.01 to 0.05 in the CaCO₃ weight fraction in the solids during the step ii) described above. Therefore, in order to make the process continuous, it is necessary to complete the method with a final step iii) of replenishing or regenerating the content of CaCO₃ in the solids resulting from step ii).

The equilibrium model solved to quantify the phenomena of DERWaGS reveals optimum operating conditions that further define the preferred conditions of operation during the hydrogenation step ii) to produce a syngas with a volume fraction of between 0.17-0.27 of CO, wherein the step ii) is carried at a operating pressure, in atm, which is within the interval resulting from multiplying 0.4-0.5 by the equilibrium partial pressure of pure CO₂ on CaO by the equilibrium constant of the reverse water gas shift reaction, with the equilibrium constants calculated at any temperature in the interval of temperatures of the calcining solids during their adiabatic cooling in step ii). Such optimum conditions are chosen from the equilibrium diagrams developed for DERWaGS, so that H₂/CO ratios close to 2 are reached in the product gas. This will facilitate the use of the syngas in downstream processes of hydrocarbon synthesis (i.e., Fischer Tropsch, Methanol, DME etc). Since the object of this invention assumes availability of low cost H₂, optimum conditions can also be defined as those leading to H₂/CO ratios lower than 2, as long as volume fractions of CO₂ in the same product gas is below 0.15. This is because it would be then easy to correct the H₂/CO ratio to the desired level by simply feeding additional H₂ to the product gas coming out from step ii).

The steps i), ii) and iii) are always decoupled: they can take place in the same vessel but in different times, or in separated vessels with a certain transport method of solids between them. When they take place in the same vessel at different times, several reactors (at least two) will operate in parallel, as in state-of-the-art temperature and pressure swing gas separation processes or chemical looping and calcium looping processes using packed beds. When steps i), ii) and iii) take place in separate vessels with a communication between them to allow solid transport between them, the method can use interconnected fluidised bed reactor systems available in the state of the art of chemical looping and calcium looping processes.

In order to reduce the net CO₂ emissions and cost of the method, it is preferred to use a range of opportunity fuels and comburent gas mixtures during the energy demanding step i). Opportunity fuels means in this context that they are low cost in the location of the plant and/or that the energy and environmentally efficiency for the combustion process in step i) is the highest. For example, by targeting the production of a flue gas during step i) free of CO₂ (i.e., when burning H₂ in the step i), or by burning the fuel gas with pure O₂ or O₂/CO₂ comburent mixtures to produce a gas concentrated in CO₂ suitable for permanent geological storage or use. Therefore, preferred embodiments of the previous method can be defined wherein the fuel in step i) is a choice of H₂ or a C-fuel, and the comburent a choice between air, enriched air or pure O₂. In such methods, direct combustion will take place in the proximity of the CaCO₃ containing solids and heat transfer from the flames or hot gases generated in said combustion will ensure the fast heating up of the CaCO₃ containing solids. However, some calcination of CaCO₃ will be unavoidable, due to the local hot spots in gas flames known to be present when combustion takes place in a packed bed (or moving bed of packed solids, such as in lime shaft kiln).

To minimise inefficiencies linked to hot spots produced by gas flames, and the associated CO₂ losses by calcination during step i), the combustion in step i) can exploit state of the art techniques for chemical looping combustion in packed or moving beds. To this end, a preferred embodiment is wherein the bed of solids containing CaO and CaCO₃ also contains a metal-containing solid such as Cu and Fe, with catalytic activity for reverse water gas shift reaction and with oxygen carrying capacity when oxidised to CuO or iron oxides, so that a chemical looping combustion process using CuO/Cu or iron oxides/Fe is used to burn the fuel in step i). The choice of Cu-containing or Fe-containing solids is justified as a way to further enhanced the kinetics of the RWGS reaction in step ii) while allowing the combustion of the fuel and heating of the bed of the solids in step i) under the characteristically moderate and well controlled temperatures in chemical looping combustion applications.

As described above, the method is applicable in continuous mode by feeding natural limestone (or other minerals containing CaCO₃) in step iii) to the adiabatic vessel where step i) takes place, and extracting solids from the reactor where the step ii) takes place. As a result of hydrogenation of CaCO₃, CaO will be a component in said stream of extracted solids. Depending on operating pressures and temperatures in step ii), the catalytic activity of CaO for RWGS will be sufficient to achieve the desired conversions in the RWGS reactions. If CaO is mixed with a Cu or Fe catalyst to enhanced RWGS reaction rates, these catalysts will be extracted with the calcined solids and a segregation or other means of mechanical separation by density or particle size will allow the recycling of the Cu-catalyst or Fe-catalyst to the reactor system, while exporting the resulting CaO product. Fe-catalyst will typically be preferred in these applications respect to Cu-catalyst, because one of the main markets for CaO products is the iron and steel industry, where impurities of Fe in the CaO do not represent a drawback in the quality of the CaO product.

Alternatively, the step iii) of regenerating the content of CaCO₃ in the solids resulting from step ii) is achieved by carbonation of CaO in contact with a gas containing CO₂. This means that the method of this invention is part of a larger method or system, involving a capture of CO₂ from a gas, as it is the case in any of the variety of methods of calcium looping for CO₂ capture.

The practical application of the previous methods requires of devices with preferred features, in particular reactors and reactor systems to allow a continuous operation of the different steps involved in the method. For simplicity, the use of additional devices to preheat reactants, recover heat from gas and solid products are omitted in the descriptions of preferred embodiments below, as they will typically be similar to those described in the state of the art of lime kilns or in the state of the art of CaCO₃ calcination and carbonation reactors in calcium looping systems, where heat recovery and preheating of gas and solid reactants are standard practises.

The methods of this invention can be carried out using packed bed reactors containing solids with CaCO₃, CaO and optionally a Cu-based or Fe-based material with reverse water gas shift catalytic properties as well as oxygen carrying capacity for chemical looping combustion of a fuel gas. In a preferred embodiment the method is carried out continuously using at least three packed bed refractory-lined reactors containing at least CaO and CaCO₃ operating in parallel, and allowing the switching of gas inlets and outlets to accommodate pressure and temperature swings, further characterised by a synchronised cycling between the following operating modes in each reactor:
i) a first combustion operating mode burning a fuel gas within the packed bed of solids with CaCO₃ containing solids;
ii) a second reverse water gas shift operating mode reacting with H₂ the heated packed bed of solids with CaCO₃ containing solids; and
iii) a third carbonation operating mode to regenerate the CaCO₃ by carbonation of CaO with the CO₂ contained in a gas fed to the reactor.

Examples and devices for methods of chemical looping combustion in stationary packed beds are also relevant for a preferred embodiment of the method of this invention wherein at least a fourth reactor is used to allow the combustion of the fuel gas in step i) in two chemical looping combustion sub-steps: a first sub-step wherein the solids containing CuO, are reduced with the fuel gas and a second sub-step where the reduced solids are oxidised with a comburent gas. Such arrangement allows the capture of the CO₂ released during the combustion step i), thereby increasing the overall CO₂ capture efficiency in the system.

Examples for calcination processes for CaCO₃ in moving bed shaft kilns with a single shaft are also relevant for a preferred embodiment of the method of this invention wherein the method is carried out in a single moving bed shaft kiln of limestone, further characterised by a step iii) wherein there is feeding of limestone to the top of the shaft while discharging CaO from the bottom of the shaft, so that the total bed of solids in the shaft move downwards during step iii) before a new cycle of combustion (step i)) and hydrogenation (step ii)) takes place.

Examples of calcination processes for CaCO₃ in double shaft kilns are also relevant for this invention because of their inherent high thermal efficiency properties when it comes to use the sensitive heat of all gas and solid products of reaction to preheat solid and gas reactants.

When the methods described above require of a continuous movement of solids containing CaCO₃ and CaO in particulate form between reactors, it is also disclosed a device to carry out the methods comprising:
i. two refractory-lined interconnected fluidised bed reactors, a first reactor and a second reactor (either bubbling, circulating or entrained-type or their combinations thereof) comprising gas-solid separation devices to allow circulation of solids between the first and second reactor and means to keep separated the reaction atmospheres of said reactors;
ii. a fuel gas supply line and a gas comburent line connected to a bottom of the first reactor;
iii. an exhaust line for flue gases connected to the gas-solid separation device of the first reactor;
iv. a first stand-pipe connected to a bottom of the gas-solid separation device of the first reactor to circulate the solids heated in the first reactor to the second reactor;
v. a hydrogen supply line connected to a bottom of the second reactor;
vi. an exhaust line for syngas connected to the gas-solid separation device of the second reactor;
vii. a second stand-pipe connected to a bottom of the gas-solid separation device of the second reactor to circulate the solids calcined in the second reactor to the first reactor; and
a solid supply line of CaCO₃ connected to any point in the solid circulation loop and a solid purge line connected to the first reactor.

When the methods require of a continuous movement of solids of CaO, CaCO₃, and a Cu-based or Fe-based reverse water gas shift catalyst, it is also disclosed a device to carry out the method comprising:
i) two refractory-lined interconnected fluidised bed reactors, a first reactor and a second reactor comprising gas-solid separation devices to allow circulation of solids between the first and second reactor and means to keep separated the reaction atmospheres of the first and second reactors;
ii) a gas comburent supply line connected to a bottom of the first reactor;
iii) an exhaust line for flue gases connected to the gas-solid separation device of the first reactor;
iv) a first stand-pipe connected to a bottom of the gas-solid separation device of the first reactor to circulate the solids heated and oxidised in the first reactor to the second reactor;
v) a hydrogen supply line connected to a bottom of the second reactor;
vi) an exhaust line for syngas connected to the gas-solid separation device of the second reactor;
vii) a second stand-pipe connected to a bottom of the gas-solid separation device of the second reactor to circulate the solids calcined and reduced in the second reactor to the first reactor;
viii) a solid supply line of CaCO₃ and the solids containing CuO or iron oxides connected to any point in the solid circulation loop, and a solid purge line connected to the first reactor to extract solids containing CaO and solids containing CuO or iron oxides; and
ix) a segregator or mechanical separator of the solids containing CuO or iron oxides from the solids containing CaO.

The invention also relates to a device to carry out the method involving a regeneration of CaCO₃ containing solids by reacting CO₂ with CaO, the device further comprising a third fluidised bed reactor acting as carbonator, receiving circulating solids from the second reactor and supplying solids to any point in the solid circulation loop between the two reactors where combustion (step i)) and hydrogenation (step ii)) are taking place.

### DESCRIPTION OF THE DRAWINGS

Figure 1 illustrates a full single cycle with all the steps of this invention.
Figure 2 shows the equilibrium constant (in atm) of CO₂ on CaO according to the equation of Hills in the temperature interval 600-1100ºC.
Figure 3 is the scheme of Figure 1, with the combustion step i) taking place in two sub-steps: one of oxidation j) and one of reduction jj) of an oxygen carrier. CuO is the oxygen carrier in step i) and Cu has catalytic activity in reverse-water gas shift reactions in step ii). Note that the scheme would be identical when using Fe as RWGS catalyst instead of Cu, with the iron oxides substituting CuO in the scheme.
Figure 4 shows the equilibrium constant of the reverse water gas shift reaction according to the equation of Twigg (1989) in the temperature interval 600-1100ºC.
Figure 5 shows the equilibrium partial pressures (in atm) of CO (=H₂O), CO₂ and H₂ as a function of temperature, calculated under desorption enhanced reverse water gas shift conditions, DERWaGS when total pressure is 1 atm.
Figure 6 shows the equilibrium partial pressures (in atm) of CO (=H₂O), CO₂ and H₂ as a function of temperature, calculated under DERWaGS conditions when total pressure is 0.1 atm.
Figure 7 shows the equilibrium partial pressures (in atm) of CO (=H₂O), CO₂ and H₂ as a function of temperature, calculated under DERWaGS conditions when total pressure is 50 atm.
Figure 8 shows the equilibrium volume fraction of CO (v_{CO}=P_{CO}/P) under DERWaGS conditions as a function of temperature and for several total pressures. Symbols correspond to experimental data from Figures 13-16 (black dots from Fig 15, squares from Fig 16; white dots from Fig 13; triangles from Fig 14).
Figure 9 shows the evolution with temperature of the partial pressure of CO (atm, represented as In(P_{CO})) in a product gas under DERWaGS conditions to obtain a P_{H2}/P_{CO}=2.
Figure 10 shows the total pressure required during hydrogenation step ii) to reach a volume fraction of CO v_{CO}=0.22 under DERWaGS conditions.
Figure 11 shows the rate of calcination of CaCO₃ under the same volume fractions of CO₂ (v_{CO2} = 0.07) when diluted in N₂ (dashed line close to the X-axis of the plot) and H₂ (black and grey solid lines od duplicated experiments). The Figure also includes curves obtained in pure H₂ (dotted line close to the y-axis) and in pure N₂ (dot-dash line). Temperature 1023 K (v_{CO2,eq,1023K} = 0.09), experimented carried out in a thermogravimetric apparatus.
Figure 12 shows an experimental set up with a packed bed reactor (18 mm internal diameter and 325 mm maximum bed height) filled up with CaCO₃ containing solids, CaO (optional) and Cu/CuO containing solids (optional), used to obtain Figures 13-16.
Figure 13 shows a plot of the measured gas composition (partial pressures in atm) at the exit of reactor of Figure 12 when feeding (total flow 37.7 IN/h) a dry gas containing v_{H2}=0.93 and v_{N2}=0.07 to a bed of CaCO₃ and Cu containing solids (0.25 initial weight fraction of CaCO₃, 0.1 weight fraction of CaO, 0.21 weight fraction of Cu and rest inert material). Average bed temperature= 1043 K at 1 atm, preheated in an atmosphere of pure CO₂. Dotted lines correspond to calculated DERWaGS equilibrium composition in a range of T 1033-1053 K. It is assumed that vH₂O= vCO.
Figure 14 shows a plot of the measured gas composition at the exit of reactor of Figure 12 when feeding (total flow 52.7 IN/h) a dry gas containing v_{H2}=0.95 and v_{N2}=0.05 to a bed of CaCO₃ and Cu containing solids (0.33 initial weigh fraction of CaCO₃). Average bed temperature= 1115 K at 5 atm, preheated in an atmosphere of pure CO₂. Dotted lines correspond to calculated DERWaGS equilibrium composition in a range of T 1098-1123 K. It is assumed that vH₂O= vCO.
Figure 15 shows a plot of the measured gas composition at the exit of reactor of Figure 12 when feeding (total flow 12.7 IN/h) a dry gas containing v_{H2}=0.79 and v_{N2}=0.21 to a bed of CaCO₃ and Cu containing solids (0.18 initial weigh fraction of CaCO₃). Average bed temperature= 988 K at 0.46 atm, preheated in an atmosphere of pure CO₂. Dotted lines correspond to calculated DERWaGS equilibrium composition in a range of T 973-1003 K. It is assumed that vH₂O= vCO.
Figure 16 shows a plot of the measured gas composition at the exit of reactor of Figure 12 when feeding (total flow 12.7 IN/h) a dry gas containing v_{H2}=0.79 and v_{N2}=0.21 to a bed of CaCO₃ containing solids. Average bed temperature= 1033 K at 1 atm, preheated in an atmosphere of pure CO₂. Dotted lines correspond to calculated DERWaGS equilibrium composition in a range of T 1013-1043 K. It is assumed that vH₂O= vCO.
Figure 17 shows a schematic of a device to carry out the method of the invention using a moving bed single shaft kiln.
Figure 18 shows a schematic of a device to carry out the method of the invention using a packed bed.
Figure 19 shows a schematic of a device to carry out the method of the invention using interconnected fluidized beds.

### DETAILED DESCRIPTION OF THE INVENTION

Reference is made from this point to the accompanying drawings to define preferred embodiments of the invention and provide equilibrium modelling calculations and experimental evidence to support the claims. Figure 1 represents the sequence of process steps of the invention. All other embodiments disclosed below contain the steps disclosed in Figure 1. The target of the method is the hydrogenation and calcination of CaCO₃ with H₂, to produce CaO and a gas containing at least H₂, CO, CO₂ and H₂O₍ᵥ₎. The endothermic enthalpy of hydrogenation is taken as ΔH=211 kJ per mol of CaCO₃ reacted to CO and H₂O; and ΔH=170 kJ per mole of CaCO₃ calcined to CaO and CO₂, with the difference between two enthalpies (41 kJ/molCO₂) being the enthalpy of the reverse water gas shift reaction, RWGS; all enthalpies are assumed independent of temperature, for simplicity in the calculations. The hydrogenation and calcination method of this invention is achieved by repeating three consecutive steps:
a first step i) of combustion of a fuel to heat up a bed of solids containing at least CaO and CaCO₃, carried out to heat them up to a maximum heating temperature, Tₘₐₓ, of between 700-1100 ºC, and at a pressure being essentially the equilibrium partial pressure of CO₂ on CaO at the maximum heating temperature, to allow heating of the CaCO₃ containing solids while minimising their calcination;
a step ii) of hydrogenation of the solids containing CaO and CaCO₃ that produces an adiabatic cooling of the solids of between 50-250ºC by using the heat stored in the solids during step i) to drive the endothermic hydrogenation and calcination reactions taking place during step ii);
and a step iii) to regenerate the initial content of CaCO₃ in the solids resulting from step ii) by replacing CaO formed in ii) by a feed of CaCO₃ or by carbonating CaO generated in ii) by reacting it with a gas containing CO₂ and form CaCO₃.

All external energy supplied to drive the endothermic hydrogenation of CaCO₃ and the endothermic calcination of CaCO₃ is supplied during step i) and iii). The adiabatic cooling marked as ΔT=50-250ºC in Figure 1, will be proportional to the molar conversion of CaCO₃ to CaO during step ii), that comes from the addition of the molar conversions of hydrogenation of CaCO₃ to CO and H₂O and the calcination of CaCO₃ to CO₂, all multiplied by their respective enthalpies of hydrogenation and calcination. Typically, depending on reactor characteristics to carry out the method (as discussed below) the CaCO₃ containing solids will start step ii) at the temperature of Tₘₐₓ attained at the end of step i). They will progressively cool down as the CaCO₃ conversion to CaO increases during step ii). To estimate the range of expected ΔT during adiabatic cooling, it is assumed for simplicity that all specific heat capacities of all solids are 1kJ/kgºC and that gas reactants are preheated to close to the gas product temperatures. CaCO₃ has 0.79 weight fraction of CO₂ on CaO. Therefore, the release of just 1%w of CO₂ from a solid containing CaCO₃ will translate into an adiabatic cooling of 48ºC when the CO₂ is fully converted to CO by RWGS (the cooling would be of 39ºC if the only products of calcination are CaO and CO₂). Common commercial processes for gas separation using solid sorbents can capture just about 1-5%w of the sorbent's weight as CO₂. This includes calcium looping CO₂ capture systems, where residual CO₂ carrying capacities (molar conversion of CaO to CaCO₃) of just around 0.05-0.07 are common after just 100 carbonation-calcination cycles. In addition, targeting values of molar conversion of CaCO₃ to CaO during step ii) higher than 0.07, characteristic of advanced Ca-sorbent materials, would be counterproductive for the method of this invention, because the associated adiabatic cooling would bring the solids to temperatures where the kinetics of calcination become too slow (i.e., < 700ºC) to design process intensive operations. Therefore, adiabatic cooling between 50-250ºC is the preferred range of temperature change for step ii).

As shown in Figure 1, the combustion step i) is carried out by burning in the proximity of the CaCO₃ containing solids a fuel gas with a comburent (for example using combustion methods such as those used in lime kilns, which are the most efficient methods to supply heat directly to CaCO₃ containing solids). If the comburent is air (i.e., conventional combustion) and the gas fuel contains carbon, there will be emissions of CO₂ diluted in the flue gases coming from the energy intensive combustion step i). To avoid such CO₂ emissions, O₂ or mixtures of O₂/CO₂, can be used as comburent instead of air, using techniques of oxy-combustion in lime kilns. Alternatively, H₂ can be used as fuel gas in this combustion step i), so that there is virtually no CO₂ emitted in the flue gases from step i).

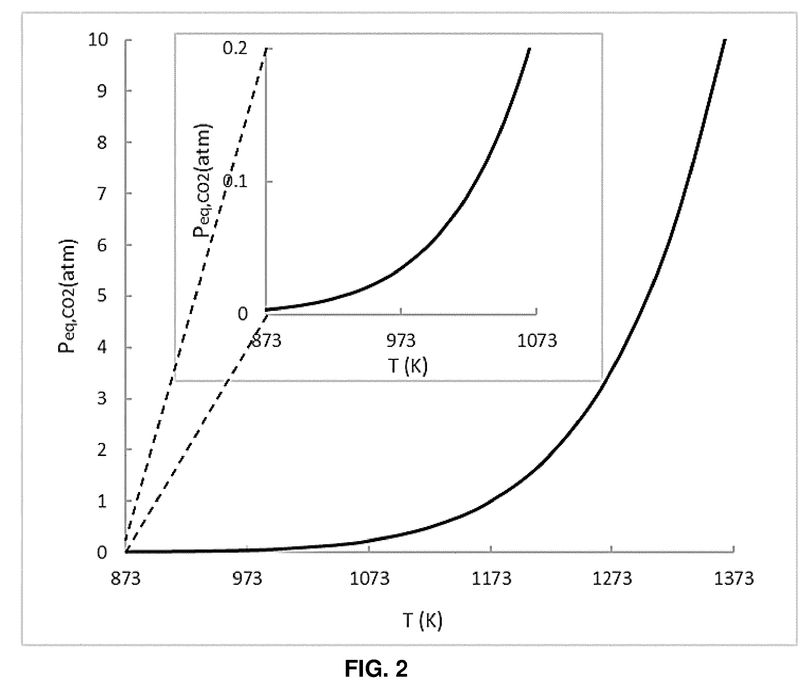

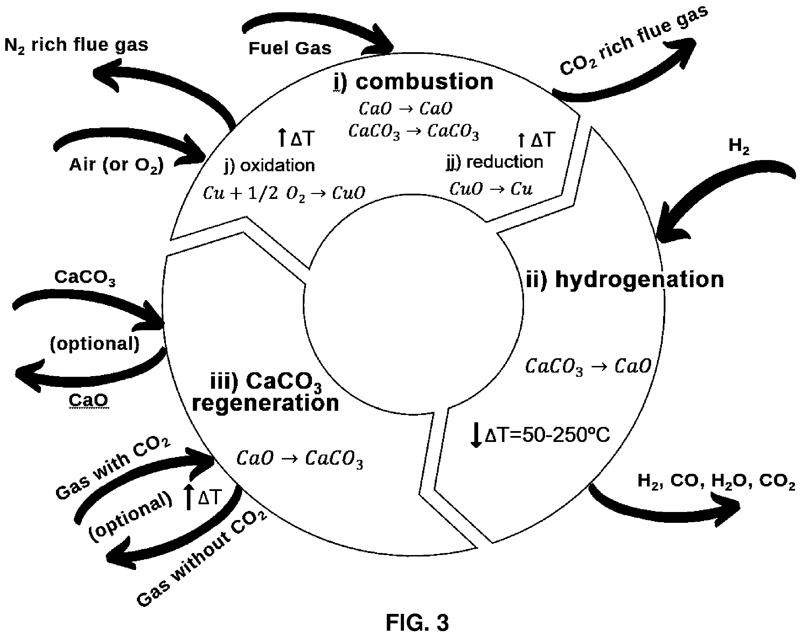

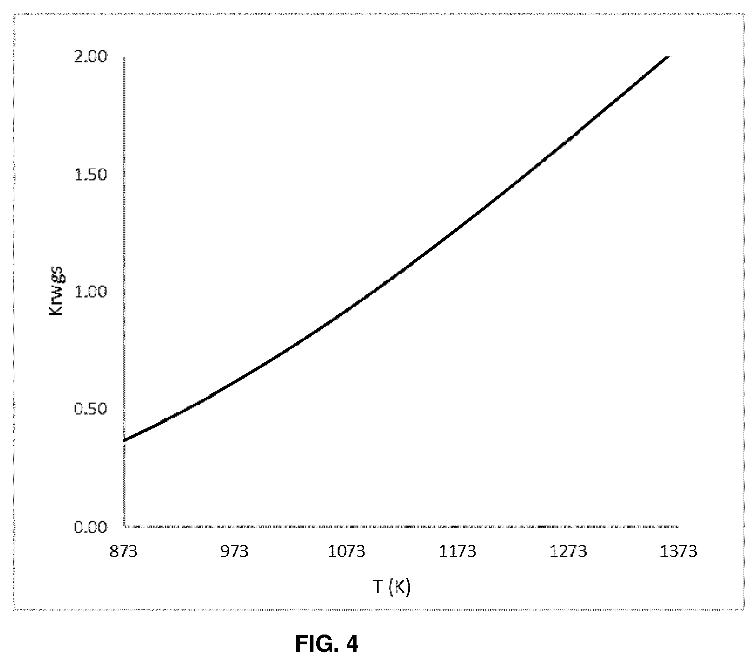

Furthermore, to maximise syngas product yields, it is critical for this method that the energy released during the combustion step i) is mainly used to heat up the CaCO₃ containing solids and their accompanying solids (that will be at least CaO, resulting from a partial calcination of CaCO₃ and a RWGS catalyst, if any) and not to calcine them during step i). When extensive calcination takes place during step i), there is a loss of CaCO₃ reactant for the hydrogenation and syngas production step ii) and an unwanted emission of CO₂ during step i). Heating CaCO₃ containing solids without calcining them (or keeping low their calcination conversion during such heating) is achievable by operating the combustion step i) at conditions close to the equilibrium of CO₂ on CaO, so as to maximise the heating rate of solids while minimising their rate of calcination. For example, in lime shaft kilns, operating at close to atmospheric pressure (P_{comb}=1), stones of CaCO₃ are heated up to a Tₘₐₓ of about 900º±50ºC by the combustion flames in the kiln in just a few minutes, well before they can calcine (note that full calcination of a stone in the kiln usually takes several hours). This is consistent with the fact that the equilibrium partial pressure of CO₂ on CaO reaches 1 atm around 900ºC (see Figure 2) and calcination is controlled by the heat transfer to the calcination fronts that develop in the CaCO₃ containing solids at kiln conditions. However, some CO₂ emissions from the decomposition of CaCO₃ containing solids to CaO will be unavoidable during the combustion step i), due to local temperature profiles when flames have developed in the bed of CaCO₃ containing solids of step i). To further reduce these unwanted losses of CO₂ during the combustion step i), it is preferred to carry out the combustion step using a chemical looping combustion method to burn the fuel gas used in step i) without contacting the air (or the O₂) used as comburent. As schematically shown in Figure 3, the CaCO₃ containing solids are in the proximity of a third solid, containing an oxygen carrier metal oxide (CuO in this case, although it could also be an iron oxide) that can be reduced to its metal form (Cu in this case, although it could also be Fe or a reduced form of the initial iron oxide) while burning the fuel gas. As will be shown below, Cu/CuO and Fe/iron oxides such as FeO, Fe₃O₄ or Fe₂O₃, are preferred among other oxygen carriers in the state of the art of chemical looping combustion, because when in reduced form, Cu and Fe are known to have RWGS catalytic activity. Note that the small fraction of CaO produced in step i), or coming unconverted from previous reaction steps in the method, has been recently found to also have catalytic activity for RWGS (Giammaria et al, 2020). Figure 4 plots the equilibrium constant of the RWGS reaction according to the equation of Twigg in the temperature interval 600-1100ºC of interest for this invention.

The second step in the method of this invention (see Figures 1 and 3) is targeted to maximise the hydrogenation reaction of CaCO₃ containing solids when reacting them with H₂. Since the CaCO₃ containing solids have been previously heated up to an average temperature of Tₘₐₓ, they will decompose and/or react with H₂ when submitted to the conditions in step ii). This step ii) must be carried out under adiabatic conditions and without fully running out of CaCO₃ in the reaction environment. This is because, the intention is to use the supply of CO₂ from the CaCO₃ calcination reaction as a feedstock of pure CO₂ for the RWGS reaction. Indeed, as will be discussed below, several preferred embodiments of the method of this invention will operate under conditions that, to our knowledge, have not yet been described in the state of the art: conditions wherein the Desorption Enhanced RWGS phenomena, DERWaGS, appears.

The DERWaGS phenomena is the reverse of what is known in the state of the art as CaO-based Sorption Enhanced Water Gas Shift (Ca-SEWGS) reactions to produce H₂ from C-fuels. The DERWaGS equilibrium promotes the maximum formation of CO from CaCO₃ and H₂, while minimising the presence of CO₂ in the product gas, by operating under conditions where the partial pressure of CO given by the RWGS equilibrium is higher than the partial pressure of CO₂ given by the equilibrium of CO₂ on CaO. Under DERWaGS, the only feed gas (or initial gas reactant) participating in the RWGS equilibrium is hydrogen and the only source of CO₂ in the gas phase is the pure CO₂ coming from decomposition of CaCO₃. In these conditions, it is possible to demonstrate that by operating at pressure and temperature conditions that ensure fast calcination kinetics, as well as fast RWGS kinetics, it is possible to increase the productivity of CO in the CaCO₃ hydrogenation step, by generating a product gas with CO concentrations higher than those achievable when an equivalent mixture of H₂ and CO₂ (i.e., CO₂ at a concentration equal to the equilibrium concentration at the operating temperature) are fed to a reactor operating at the same temperature and pressure.

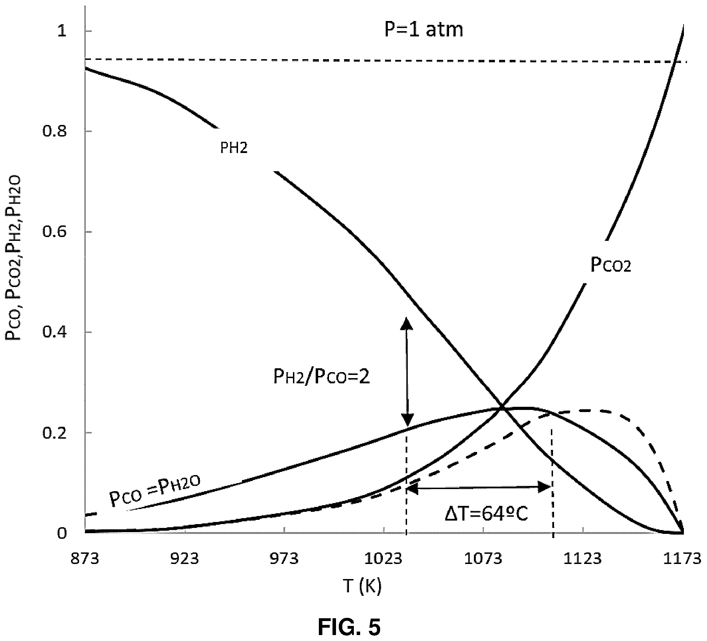

Figure 5 illustrates the DERWaGS equilibrium in a region of temperatures of interest between 600-900ºC, with a total pressure equal to P=1 atm. The figure has been plotted assuming that both the equilibrium of CO₂ on CaO (Figure 2) and the RWGS equilibrium (Figure 4) are fulfilled, and that H₂ is the only gas fed to the inlet of a reactor containing CaCO₃ containing solids. The fact that CaCO₃ exist in the reactor in equilibrium, implies that P_{CO2} (in atm) in the gas phase is given by equation of Figure 2. The fact that pure H₂ is fed to the reactor, implies that P_{H2O}=P_{CO} according to the stoichiometry of the RWGS reaction. This leaves P_{CO} as the only unknown in the resulting quadratic equation when substituting variables in the RWGS equilibrium equation. This allows the construction of DERWaGS equilibrium Figures 5-8. Surprisingly, preferred pressure and temperature windows of operation for the hydrogenation step ii) emerge from these thermodynamic equilibrium curves.

As can be seen in Figure 5, an optimum temperature for the hydrogenation of CaCO₃ exist at 771ºC, because at such temperature, the product gas contains a partial pressure of CO (P_{CO}= 0.217 atm) that corresponds to a molar ratio H₂/CO=2 in the syngas, which is known to be optimum for downstream synthesis processes (i.e., Fischer-Tropsch). Increasing the temperature from that point, increases slightly the yield to CO, although values of H₂/CO decrease. However, values of H₂/CO lower than 2 are also preferred because they could be easily corrected to a value of 2 by adding H₂ (assumed to be a feedstock for this method) to the product gas exiting the reactor during step ii). Operating temperatures higher than 835ºC would be less productive when it comes to converting CaCO₃ into CO. This is because at temperatures higher than 835ºC, the CO₂ partial pressure, P_{CO2}, in the product gas increases sharply. Therefore, an optimum temperature window of ΔT=64°C has been plotted in this figure for illustrative purpose when operating at close to atmospheric pressure. Remarkably, such temperature range is within what is feasible from the heat balance described above when discussing on the expected range of ΔT during adiabatic cooling.

Figure 5 also includes a thick dashed curve that shows the equilibrium partial pressure of CO and water vapour that would be achievable at the exit of a RWGS reactor empty of CaCO₃ and fed with a gas containing CO₂ at the partial pressure given by the equilibrium curve P_{CO2} in the same figure (with the rest of the gas being H₂). The DERWaGS phenomenon clearly yields higher P_{CO} in the product gas until a temperature of 835ºC (1108 K) is reached. From that point, calcining first the CaCO₃ to obtain a gas with pure CO₂ and then feeding H₂ to the resulting CO₂ stream before entering a RWGS reactor, would yield a RWGS product gas with slightly higher concentrations of CO. However, it is most likely that the method of this invention would still be economically preferable, as all reaction steps are taking place in a single reactor, while the alternative approach in the state of the art is to use two separated reactors (one for calcination and another one for RWGS reactions). In summary, when operating the method at close to atmospheric pressure, maximum temperatures Tₘₐₓ as high as 850ºC are adequate to mark the end of the combustion step i) and minimum temperature of 750ºC (i.e., ΔT=100°C) are adequate to mark the end of the adiabatic cooling taking place during the hydrogenation step ii).

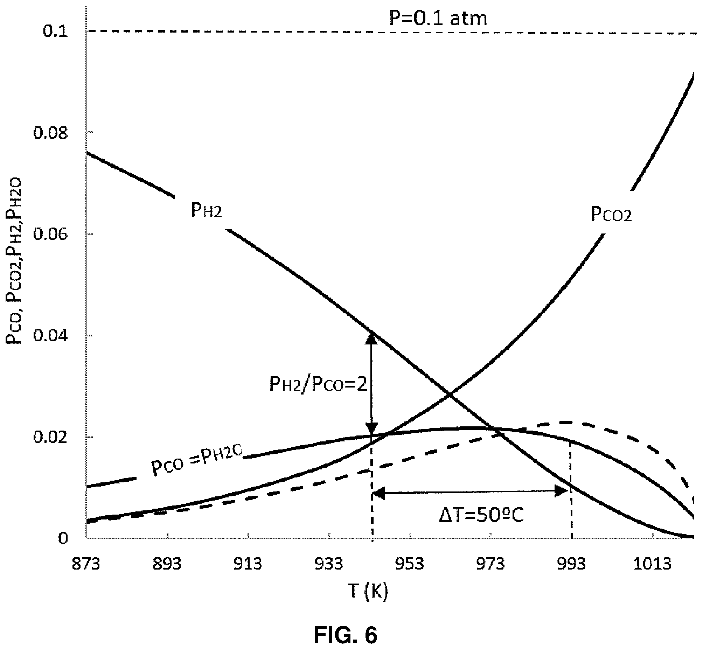

The skilled in the art can reproduce the previous analysis to other operating pressures and temperatures, as shown in Figures 6-8. Figure 6 shows that when applying the method using pressures under the atmospheric (i.e., vacuum pressures during step i) and ii)) it is possible to obtain gases with similar partial pressures of CO, that reach values as high as v_{CO}=0.2 (= P_{CO}/P) due to the DERWaGS phenomena.

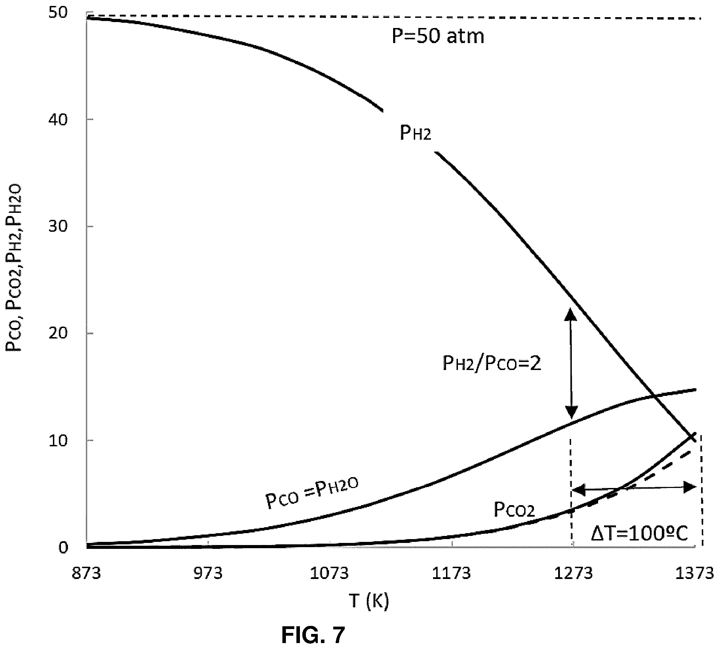

In contrast, Figure 7 shows that the DERWaGS phenomena is negligible at the high pressure (P=50 atm) used to build these equilibrium curves. This is due to the steep increase in P_{CO²} as temperature increases. The method applied at these high pressures demands for temperatures Tₘₐₓ= 1100ºC to be reached at the end of the step i). A preferred minimum temperature to mark the end of step ii) is 1000ºC, as the H₂/CO ratio becomes lower than 2 at lower temperatures. The operation of steps i) and ii) at such extreme temperatures and pressures can be justified if limestone is used as a feedstock in step iii) to produce a syngas that can be fed to Fischer Tropsch or other PtL processes located downstream of the process of this invention, which are usually carried out at this or even higher pressures, with a molar ratio of H₂/CO=2.

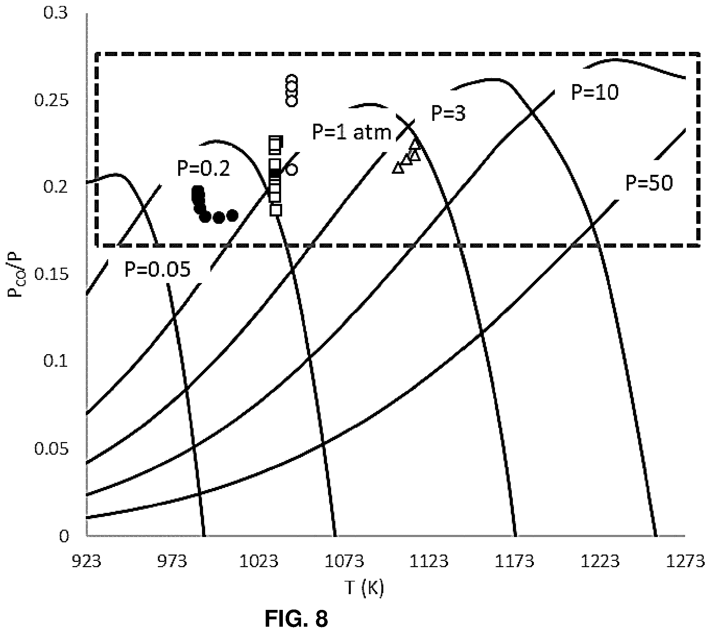

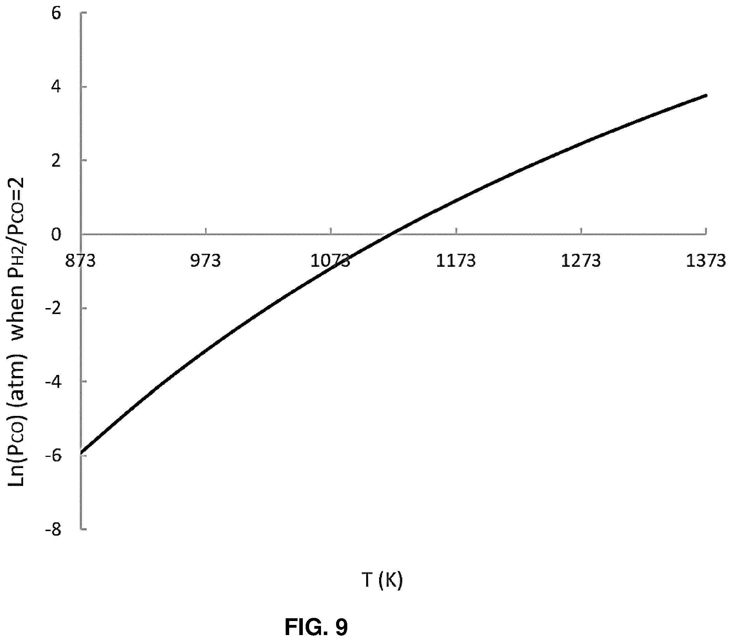

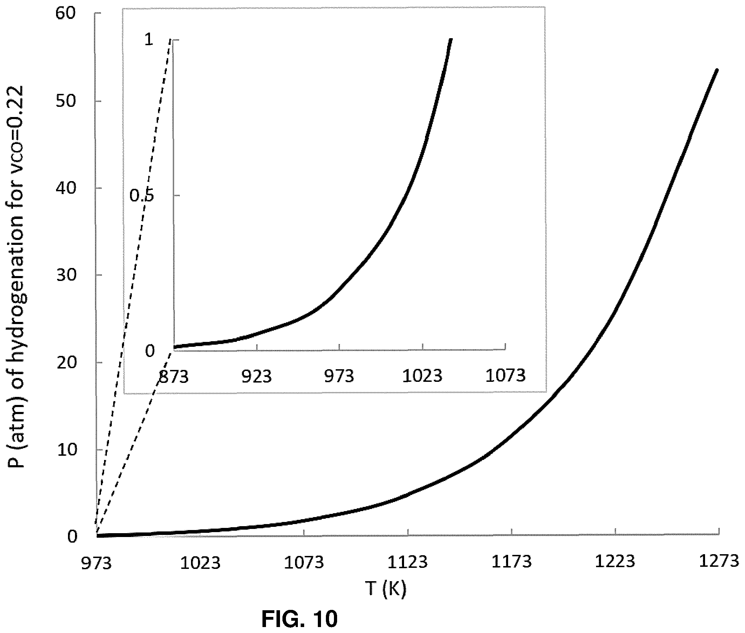

Using results like those in Figures 6-7 for other pressures, allows to plot in Figure 8 the volume fractions of CO (v_{CO}=P_{CO}/P) in the product gas of step ii) as a function of temperature and for different operating pressures during the step ii). The experimental points included in the Figure 8 will be discussed later. Note that the curves refer to P_{CO} but would be identical for P_{H2O}. It becomes evident from these equilibrium curves that a volume fraction of CO between 0.17-0.28 is achievable under a wide range of temperatures if the pressure during the hydrogenation step ii) is adjusted correctly to the temperature of the solids. For example, a target gas composition with an H₂/CO molar ratio of 2, and having v_{CO}=0.22, would have a v_{H2O}=0.22, v_{H2}=0.44 and the remaining balance would be v_{CO2}=0.12. To identify conditions of temperature and pressure at which such gas product would be produced at equilibrium, first note that P_{CO2}=0.12 demands for an equilibrium temperature of 766º C at atmospheric pressure. On the other hand, Figure 9 shows the solution of the DERWaGS equilibrium when the molar ratio H₂/CO=2. At the temperature of 766ºC (1039K), the P_{CO} given by the DERWaGS equilibrium is P_{CO}=0.194 atm. Therefore, to maximise the partial pressure of CO to the target value of 0.22, a total pressure P=0.89 atm during hydrogenation step would be needed. Figure 10 plots such equilibrium dependency of optimum total pressure during hydrogenation step to achieve a v_{CO}=0.22 in the product gas. The pressure swing between step i) and ii) in the example below is only 0.11 atm (=1-0.89) which is reachable at large scale even by the negative pressure produced by the blowers needed to force the contact of the reacting gases with the bed of solids containing CaCO₃.

As it is derived from Figures 5-10, the composition of the product gas will change with time as the adiabatic cooling takes place during the hydrogenation reaction step ii), unless pressure changes with time during such step ii). Therefore, it can be operated the hydrogenation step ii) with a continuous pressure change (a decrease) in order to follow the equilibrium curves as shown in Figure 10 and maintain a stable volume fraction of CO in the product gas, if this is needed for the processes taking place downstream to use the syngas produced by the method of this invention.

As discussed above, in each cycle of the method of this invention, the step ii) consumes a quantity of CaCO₃ that is in the order of between 1-5%w of the total mass of solids initially present in the bed of solids containing CaCO₃. This means that to run the process continuously, a feeding operation of said mass of CaCO₃, and the extraction the molar equivalent quantity of CaO, needs to be accomplished in the CaCO₃ regeneration step iii), as represented in Figure 3 ("optional" at the top of step iii)). This can be done using techniques available for lime kilns.

In other preferred embodiments of the method, the process is linked to a CO₂ capture step where the solids containing CaCO₃ are regenerated in step iii) by carbonation of CaO in contact with a gas containing CO₂, as represented in Figure 3 ("optional" at the bottom of step iii)). It is known in the state of the art of calcium looping to capture CO₂ with CaO, that the optimum temperature for carbonation is between 600-700ºC for a wide range of flue and fuel gas compositions at close to atmospheric pressure. Such optimum range of carbonation temperatures increases with pressure. On the other hand, the carbonation reaction of CO₂ with CaO is exothermic, and would rise the temperature of the bed of solids containing CaCO₃ containing solids resulting at the end of a carbonation step iii). However, heat losses and the need to supply the energy required for the RWGS will still demand for a combustion step i), to heat up the solids to Tₘₐₓ 800-1100ºC, before switching a step ii).

To ensure that the kinetics of the RWGS are sufficiently fast in the temperature interval of the solids between the beginning and the end of step ii) corresponding to adiabatic cooling, the introduction of a known RWGS catalyst (i.e., Cu-based catalyst or Fe-based catalyst) is preferred. Said Cu or Fe catalyst are known to accelerate RWGS reactions. Furthermore, when oxidised to CuO or iron oxides and reduced back to Cu or Fe, they enable the chemical looping combustion (see Figure 3) required to heat the solids to Tₘₐₓ in step i).

### EXAMPLES

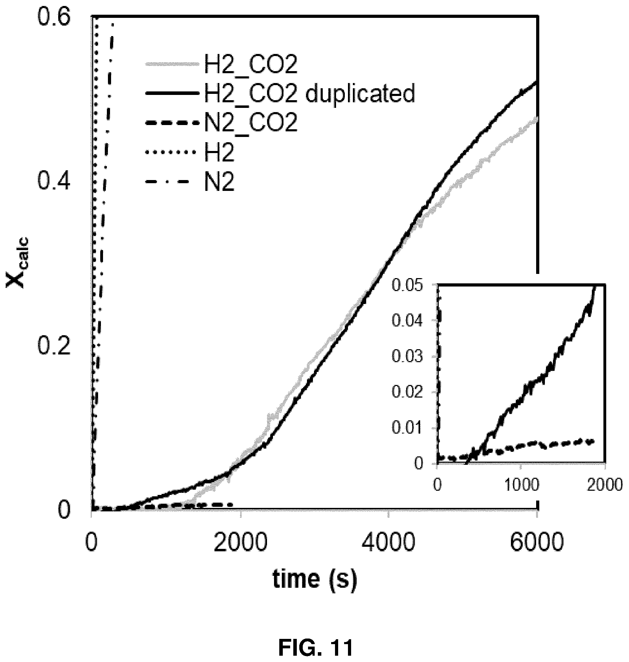

Regarding examples with experimental evidence supporting the previous thermodynamic analysis about the DERWaGS phenomena, the state of the art is silent. To experimentally demonstrate the DERWaGS phenomena, Figure 11 show a first experiment conducted in a standard thermogravimetric apparatus testing the rate of calcination of CaCO₃ fine particles at atmospheric pressure and 750ºC. The sample of 10mg of CaCO₃ is previously heated in an atmosphere of pure CO₂ at 750ºC to avoid decomposition, and then the gas contacting the sample is switched to have a pre-set vol fraction equal to 0.07 (which is only slightly below the equilibrium value of 0.09 of CO₂ vol at 750ºC according to Figure 2). Two curves of molar calcination conversion, Xcal, vs time are plotted under the same 0.07 value of volume fraction of CO₂: when diluted in N₂ (dashed line) and when diluted in H₂ (solid line). As can be seen, in the case of N₂-CO₂ the calcination rate is extremely slow. This is consistent with the state of the art of calcination kinetics of CaCO₃ in the proximity of the equilibrium of CO₂ on CaO. In sharp contrast, the calcination rate of CaCO₃ accelerates when the test is carried out at the same temperature and using a mixture of H₂/CO₂ with identical CO₂ volume fraction than the previous N₂/CO₂. It is remarkable the acceleration observed in the conversion vs time curve, perhaps linked to the increasing availability of CaO in the sample of solids, enhancing through catalytic effects the RWGS reaction in the proximity of the calcining solids, as recently identified by Giammaria et al. Irrespective of the underlying mechanism, it becomes evident from Figure 11 that the assumption of fast calcination rate during hydrogenation step ii), leading to Figures 5-8, is well supported by experimental evidence, because there is an acceleration in orders of magnitude of the rate of calcination during hydrogenation of CaCO₃ respect to the rate of calcination in a N₂-rich atmosphere.

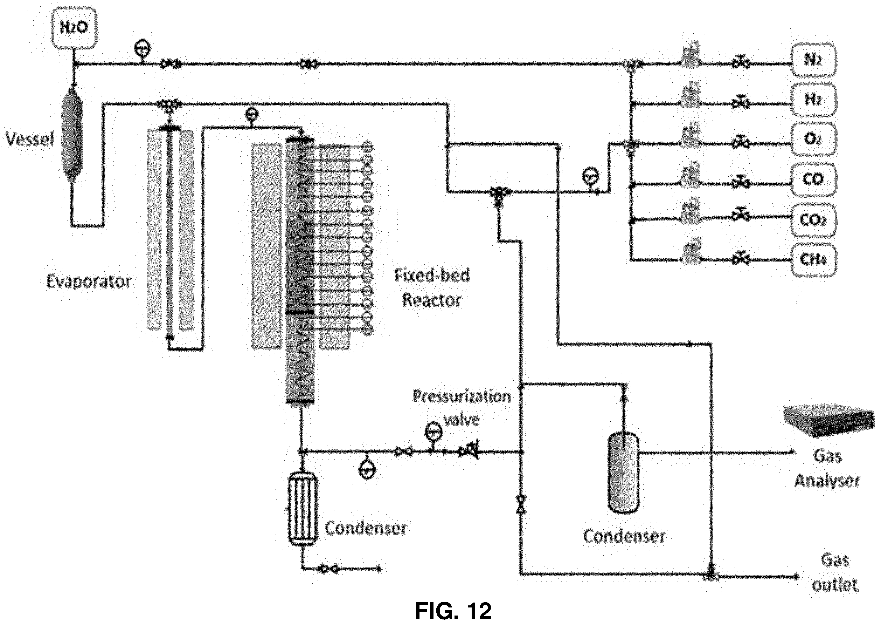

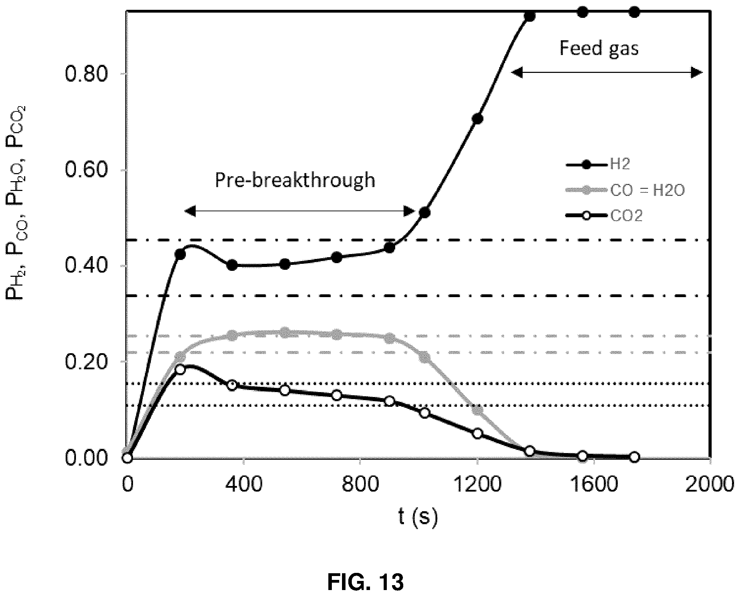

Regarding more direct experimental evidence for DERWaGS, Figure 12 shows the experimental set up that has been used to gain such evidence. This includes a packed bed reactor (18 mm internal diameter and 325 mm maximum height of bed of solids) filled up with CaCO₃ containing solids, together with CaO (optional) as RWGS catalyst and Cu/CuO containing solids (optional) as RWGS catalyst and as oxygen carrier. To facilitate experiments in such a small device, the step of heating by combustion is substituted by a step of preheating the solids with an electric oven to the pre-selected temperature in an atmosphere of pure CO₂ to avoid CaCO₃ decomposition during heating. A fast switching of valves allows the sudden feeding of H₂ to the preheated solids (for convenience, in order to trace gas concentrations in the existing analyser, a 20%v of N₂ is used to dilute the H₂ fed to the reactor). As can be seen in Figure 13, the product gas has a composition fully consistent with the DERWaGS equilibrium during the first 1000 seconds of the experiment. The packed bed configuration of the solids and the nature of the experimental set up does not allow for a precise control of local temperatures in different parts of the bed. Therefore, two dashed lines show the theoretical gas composition in a reasonable interval of temperatures in the bed of solids (see Figure caption for more details).

Figure 13 shows for illustrative purposes a few points on the right hand side that correspond to a period when the hydrogenation of CaCO₃ has been completed and the concentration of H₂ at the outlet of the reactor equals the concentration at the inlet.

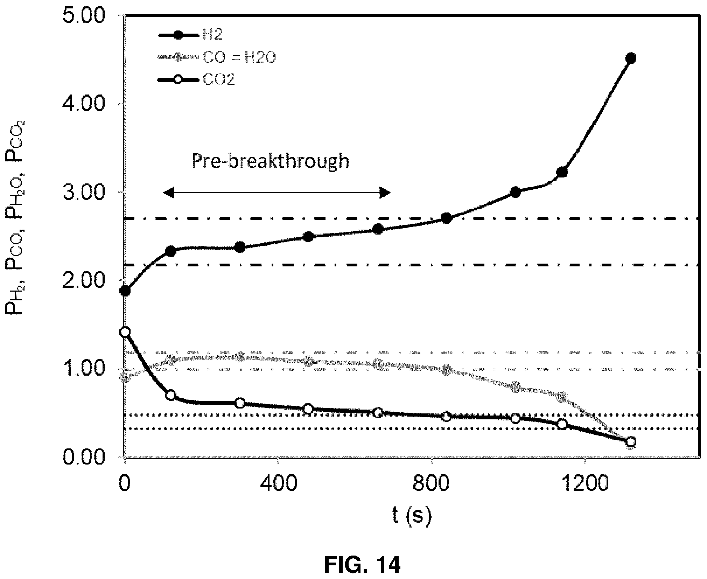

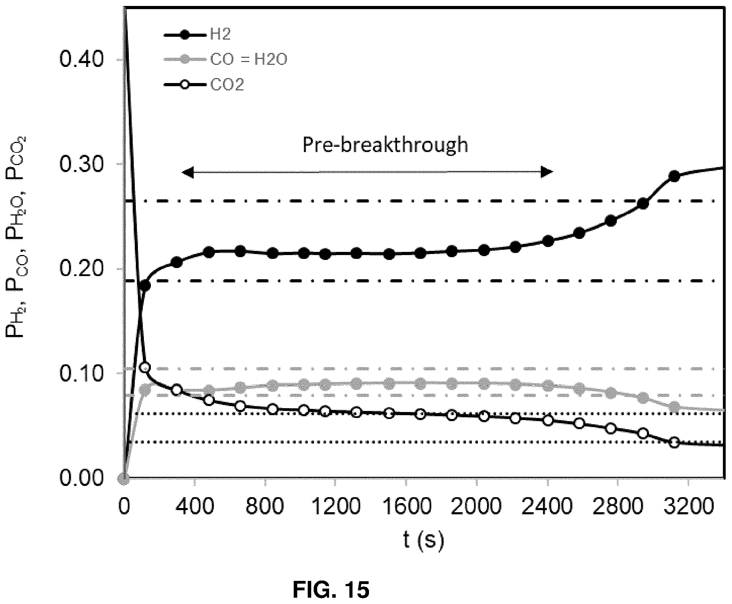

Figure 13-15 confirm the results of Figure 12 in experiments conducted at other different pressures and temperatures (see captions).

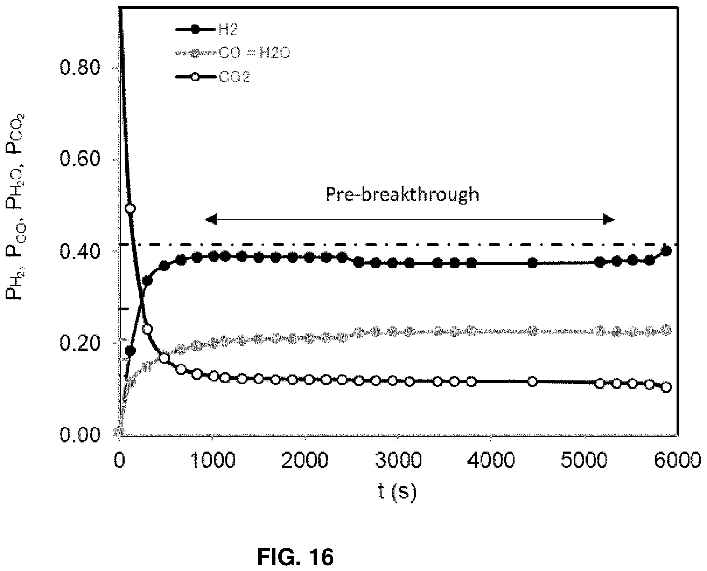

In experiments of Figures 13-15, there is a fraction of a commercial Cu-based catalyst that is known to be active for RWGS reactions. In contrast, Figure 16 corresponds to an experiment with no such Cu-material in the bed. Therefore, the results of Figure 16 indicate that CaO formed during calcination displays a substantial RWGS catalytic activity during the DERWaGS reactions, consistent with results of Figure 11 and the state of the art given by Giammaria et al (2020). Indeed, when using the kinetic model provided by Giammaria et al (2020) for RWGS in the presence of CaO, and assuming plug flow of gases in the reactor used in Figures 13-15, it is possible to predict the compositions at the exit of the reactor and confirm similar observations.

Taking into account the results and discussions disclosed in previous paragraphs, it is possible to carry out the method of this invention using state of the art reactors and techniques in the fields of lime calcination, calcium looping for CO₂ capture and chemical looping combustion.

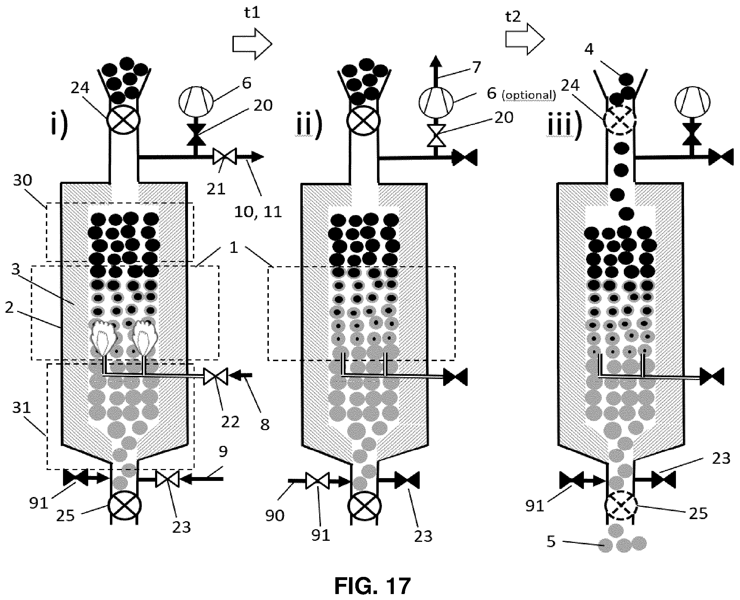

As a first example, Figure 17 discloses a preferred device to carry out the method of this invention using lime kiln technology with a single shaft. The kiln includes a refractory lined (3) external wall (2) to sustain high temperature operations in the interior of the bed of stones and pressure swings as needed for the different embodiments of the method described above. The kiln also incoporates lock-hoppers connected to a solid feeding valve (24) and a solid extraction valve (25) of solids and a number of gas switching valves (91, 20, 21, 22, 23) installed in all inlet and outlet gas pipes. At least one of the pipes (usually the pipe of flue gases (10, 11)) comprises a T pipe diversion, with a valve (20) to divert syngas product gas (7) during hydrogenation of CaCO₃. Such kiln will typically contain a preheating zone (30) for limestone (4) fed at the top of the kiln and a gas preheating section (31) at the bottom of the kiln that cools the lime product (5) with air or other gases in the comburent mix (9) used during the combustion of a gas fuel (8) to heat up the solids in the hydrogenation and calcination zone (1) in step i). The process operates with a sequence of operation periods characterized by the positions of the switching valves as indicated in Figure 17: a period of step i), typically lasting a first time t1=5-20 minutes as in existing lime kilns for limestone calcination, with a valve (21) opened for the emission of CO₂ produced during the fue combustion (11) mixed with other flue gases (10) from combustion, a valve (22) opened for the entry of a fuel (8) and a valve (23) opened for the entry of the comburent gas containing air, enriched air, or O₂/CO₂ or O₂ (9); while the solid feeding valve (24) and the solid extraction valve (25) are closed as well as valves (20) and (91). After the period of step i), it follows a period of step ii) lasting a second time t2 between 5 and 20 minutes to allow syncronise operation of different shaft kilns, characterised by the addition of a H₂ supply line (90) by keeping switching valve (91) opened, keeping the valve (20) to divert product syngas (7) produced as the hydrogenation of CaCO₃ progresses. Valves (21), (22), (23), (24) and (25) are closed during step ii). For simplicity, the evolution of the calcination conversion of the original limestone particles (4) towards fully calcined lime (5), has been represented in Figure 17 as concentric spheres of black (for limestone) and grey (for lime). For simplicity, in this configuration, the step iii) is taken a short period when all valves are closed except the feeding valve (24) and the extraction valve (25) of solids. It is possible to carry out small changes in this strategy to overlap the step iii) with a certain period during steps i) or ii). Other small variants of the process may refer to the feeding point of the comburent mix (9), for example by feeding (9) to the bottom of the calcination and hydrogenation region (1) to avoid the recarbonation of CaO when (9) is a comburent mix of O₂/CO₂, following the teachings of other oxy-fired shaft kilns. A vacuum pump (6) is optionally included in Figure 17 for preferred embodiments when the shaft kiln is operated at pressures under the atmopheric pressure. For simplicity, the device of Figure 17 is a single shaft kiln, but similar modifications would be also valid for double shaft lime kilns. Other variants of the process may refer to the addition of a material containing Fe mixed with the feed of limestone (4), to catalyse RWGS reactions if the CaO present in the hydrogenation and calcination region (1) does not provide sufficient catalytic activity.

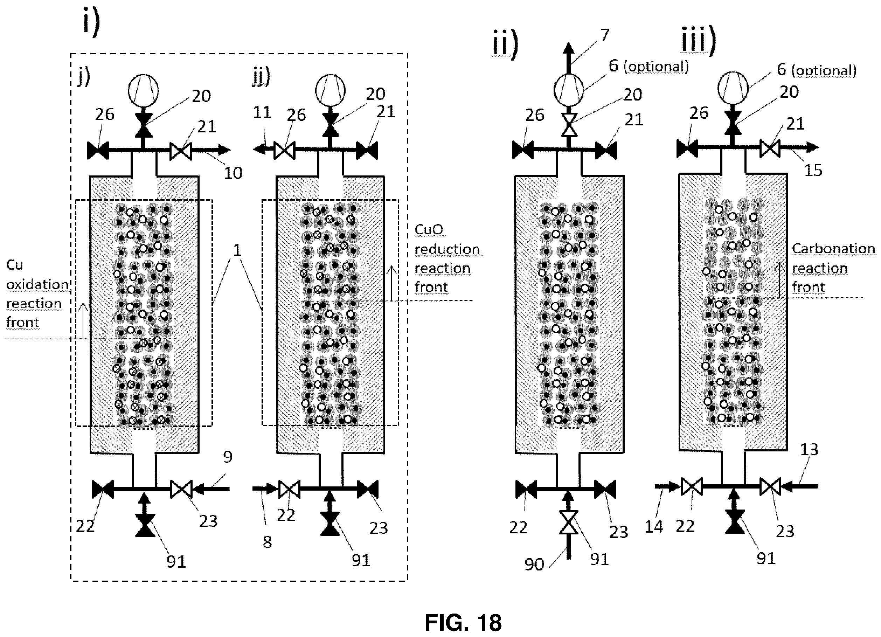

Figure 18 discloses a preferred device to carry out the method of this invention using packed bed reactors allowing pressure and temperature swings, wherein the method is carried out in a system composed of several adiabatic packed-bed reactors operating in parallel in different reaction steps, to allow the continuous treatment of gas streams in a synchronised manner as in temperature and pressure swing systems. In this particular example, the bed is composed of partially carbonated lime particles (equivalent to the partially calcined limestone particles represented in Figure 17 as concentric spheres of CaCO₃ (4) and CaO (5) randomly mixed with a Cu-based material (represented as an empty circle when in reduced form and as a circle with a cross when in oxidized form). The example would be conceptually similar if Fe was used instead of Cu, and iron oxides were used instead of CuO. These materials are available in a wide range of compositions in the state of the art of chemical looping combustion and reverse water gas shift catalytic processes.

The process works cyclically, and the description can therefore be initiated from any step. Since the application of the method of this invention (steps i) and ii) as in Figure 18) requires a packed bed of solids containing CaCO₃, it will be firstly described the step involving the generation of CaCO₃ in the bed. An illustrative example is when the CaO carbonation step represented as iii) in Figure 18 is a CASOH step to decarbonize Blast Furnace Gases, BFG, (typically containing between 20-25%vol of CO₂ and 20-25% of CO with the remaining gas being mainly nitrogen). The CASOH step is a calcium-enhance water gas shift reaction where the valve (22) and the valve (23) are opened to allow the feed of BFG (13) and steam (14) to allow the enhanced water gas shift of the CO contained in the BFG. The valve (21) is also opened to allow the extraction of the CASOH H₂ rich product gas (15). A variety of temperature and pressure conditions known in the state of the art allow first a very fast water gas shift reaction of CO with H₂O to form CO₂ and H₂ catalysed by the Cu-based solids. Then, the CO₂ reacts with active CaO to form CaCO₃ as soon as it is produced, which shifts the water gas shift equilibrium towards a higher production of H₂. The reaction of CaO with the CO₂ originally contained in the BFG as well as the CO₂ produced in the water gas shift reaction of the CO originally contained in the BFG is represented in Figure 18 as a sharp carbonation reaction front. The low content of active CaO in the bed (known to be typically lower than 0.1 of the total calcium in particles cycled more than 100 times in calcium looping systems) makes the carbonation front leaving behind the carbonated solids at higher temperature due to the exothermic nature of the carbonation and the water gas shift reactions. When the active bed of solids reaches close to total carbonation and the reactor is no longer capable of absorbing CO₂, the step iii) must be terminated and step i) is initiated. In this example, step i) is a heating up step of the bed of solids containing CaCO₃ by combustion of a fuel (8) (it can be BFG or other fuel gas) to supply the necessary energy to the bed of solids that will drive the hydrogenation reactions during step ii). To this end, the combustion of a fuel gas (8) in step i), is divided into two chemical looping combustion sub-steps: j) and jj). In the sub-step j), the oxidation of the Cu-based solids to CuO can be carried out with a comburent (9) such as air, enriched air, O₂/CO₂ or even pure O₂ if available at low cost from the electrolyser providing H₂ from for step ii). The use of pure O₂ (or a mixture of O₂/CO₂) avoids any losses of CO₂ by calcination of CaCO₃ during this sub-step j). Assuming the complete conversion of the oxygen, the outlet flow (10) during this stage is zero (it would be mainly composed of nitrogen if the oxidizing gas (9) was air or enriched air). Once the Cu has been totally oxidized, the next step jj) completes the chemical looping combustion of the fuel gas flow (8). This consists of reducing the CuO solids with the fuel gas (8) while producing H₂O and CO₂ (when the fuel (8) contains carbon, if (8) is H₂ the only product of step jj) is H₂Oᵥ). During the reduction of CuO, the reaction front moves forward and the heat released during the CuO reduction is dedicated to further increase the temperature of the solids left behind the reduction reaction front. Once the CuO has been completely reduced to Cu, the packed bed is left at the target Tₘₐₓ, to initiate the hydrogenation step ii). For simplicity, the fuel gas (8) is assumed to be at the same temperature as the solids at the end of step jj). When feeding gas reactants at lower temperatures to the packed bed reactor, a heat transfer front will develop (not shown in Figure 18 for simplicity) giving as a result a colder region that grows from the entry point of the gas reactants and that is at the temperature of the gas reactants. The skilled in chemical looping combustion in packed beds can provide solutions to manage the appearance of such colder regions, for example by operating the packed beds with reverse flow of the inlet gases, by using regenerative heat exchangers to preheat feed gases, or by loading the packed bed with higher concentration of the metal (Cu or Fe) at the part of the reactor closest to the gas entrance, to compensate with additional heat (released in the combustion of a fuel gas in step i)) the cooling effect of the lower temperature feed gases.

Following the method of this invention, the next step involves step ii) in which DERWaGS pressure conditions described above are imposed on the preheated and carbonated solids to achieve the direct hydrogenation of CaCO₃ and promote the adiabatic cooling of the solids in the reactor. To this end, hydrogen (90) is fed to the bed of solids contained in (1) by opening valve (91), and to extract a syngas (7) from the previous heated solids containing CaCO₃. This is allowed because the packed bed of solids preheated in step i) contains at the beginning of this step ii) sufficient sensitive heat to accomplish the calcination of the CaCO₃, formed in step iii), leaving the bed at the assumed temperature to start a new CASOH step iii) in a subsequent cycle.

Note that the application of the method to capture CO₂ to other fuel gases containing CO₂ or to a combustion flue gas by carbonation of CaO in a packed bed, would not differ in any essential feature from the case described in the previous paragraph. The skilled in the art would prepare the bed of solids with a suitable molar ratio between active CaO and the metal used as oxygen carrier and as reverse water gas shift catalyst, so that the endothermic step ii) added to the heat losses expected in the system and the differences between inlet and outlet gas temperatures will be balanced by the heat released during the combustion step i), so that the method can be run with steady state repetitive conditions during cycles. In the device of Figure 18, the vacuum pump (6) is optional because it is only used when step ii) requires vacuum conditions to reach DERWaGS equilibrium conditions (see for example Figure 6). In applications when step ii) is carried out at high pressure, a valve (20) will be a pressure relief valve instead of an on/off valve and in applications where vacuum pressure is applied to step ii) the valve (91) will also have the role to control the vacuum pressure in the reactor.

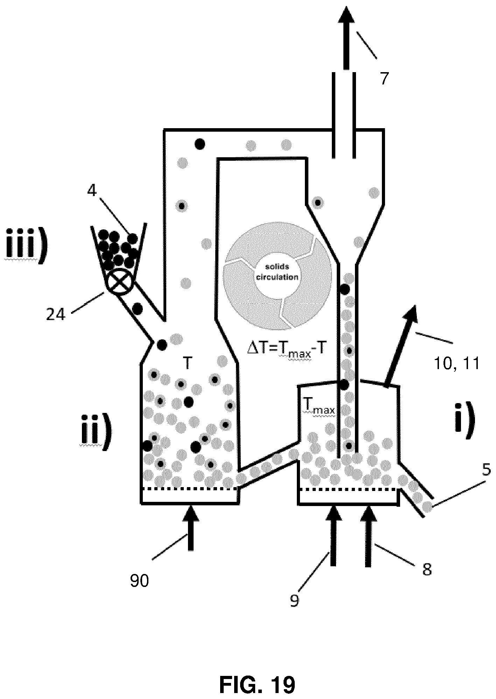

All the previous devices and examples are using packed bed or moving bed technologies, which imply that the transitions between steps i), ii) and iii) are linked to on/off valve switching of gases after certain periods of operation (t1, t2) in parallel reactors. However, the transitions between steps i), ii) and iii) of Figure 1 can be accomplished by circulating solids between different reactors. Figure 19 shows the schematic of a device to carry out the method of the invention using interconnected fluidized beds, using the same numbering as in Figures 17-18.

The application of the method using a circulating fluidised bed calciner as shown in Figure 19, relies on the establishment a continuous flow of solids between steps i), ii) and iii), while keeping the gas atmospheres separated. This particular Figure 19 refers to a method used to calcine a continuous supply of solids containing CaCO₃ (4) by feeding through a rotating valve (24) the material to a first fluidised bed hydrogenator reactor where step ii) is taking place at temperature T. The H₂ (90) fed to such reactor is both a reactant and a fluidising gas. For simplicity, we are assuming a reduction in cross-sectional area of said hydrogenation reactor to indicate that the velocity of the gases will increase if necessary, so as to transport the solids towards the exit of the reactor. A cyclone will separate the product syngas (7) from the partially calcined solids. Said solids will complete their calcination in the fluidised bed combustor where step i) is taking place, operated at Tₘₐₓ. Therefore, the fully calcined flow of CaO should be extracted from the fluidised bed combustor or from the connecting pipe between this reactor and the fluidised bed hydrogenator. Since the solids can be assumed to be well mixed in both the fluidised bed hydrogenator and the fluidised bed combustor, it will be important to adjust the values of Tₘₐₓ and T, and their differences, by controlling the thermal supply to the fluidised bed combustor (by burning a certain fuel flow (8) with the comburent (9)) and the solid circulation rate between reactors (that transfers heat from the fluidised bed combustor to the fluidised bed hydrogenator proportionally to the solid circulation rate between reactors and ΔT). This is a common practice in interconnected fluidised bed systems. Therefore, it is possible to adapt DERWaGS discussions above for packed bad moving bed reactor to set ups resembling Figure 19. Note that other forms of reactors (bubbling fluidised beds, entrained reactors or their combinations thereof) will not alter the basic design disclosed in this example below. This Figure 19 and the example is therefore only illustrative and non-restrictive.

## Claims

1. Method of hydrogenation and calcination of CaCO₃ in a thermally insulated vessel by reacting it with H₂, to produce CaO and a syngas containing at least H₂, CO, H₂O and CO₂, **characterised by** a sequence of at least the following consecutive steps carried out at least twice:
i) a step of combustion of a fuel to heat up a bed of solids containing at least CaO and CaCO₃ to a maximum heating temperature between 700-1100ºC, at a pressure being essentially the equilibrium partial pressure of pure CO₂ on CaO at the maximum heating temperature;
ii) a step of reacting with H₂ the heated bed of solids containing at least CaO and CaCO₃, while allowing their adiabatic cooling by 50 to 250ºC;
iii) a step of replenishing or regenerating the content of CaCO₃ in the solids resulting from step ii).

2. Method according to claim 1, wherein the step ii) is carried at an operating pressure, in atm, which is within the interval resulting from multiplying 0.4-0.5 by the equilibrium partial pressure of pure CO₂ on CaO by the equilibrium constant of the reverse water gas shift reaction, with the equilibrium constants calculated at any temperature in the interval of temperatures of the calcining solids during their adiabatic cooling in step ii).

3. Method according to any one of claims 1 to 3, wherein the fuel in step i) is a choice of H₂ or a C-fuel, and the comburent a choice between air, enriched air or pure O₂.

4. Method according to any one of claims 1 to 3, wherein the bed of solids containing CaO and CaCO₃ also contains a metal-containing solid such as Cu and Fe, with catalytic activity for reverse water gas shift reaction and with oxygen carrying capacity when oxidised to CuO or iron oxides, so that a chemical looping combustion process using CuO/Cu or iron oxides/Fe is used to burn the fuel in step i).

5. Method according to any one of claims 1 to 4, wherein the step iii) of regenerating the content of CaCO₃ in the solids resulting from step ii) is achieved by carbonation of CaO in contact with a gas containing CO₂.

6. Method according to claim 5, wherein the method is carried out continuously using at least three packed bed refractory-lined reactors containing at least CaO and CaCO₃ operating in parallel, and allowing the switching of gas inlets and outlets to accommodate pressure and temperature swings, further **characterised by** a synchronised cycling between the following operating modes in each reactor:
i) a first combustion operating mode burning a fuel gas within the packed bed of solids with CaCO₃ containing solids;
ii) a second reverse water gas shift operating mode reacting with H₂ the heated packed bed of solids with CaCO₃ containing solids;
iii) a third carbonation operating mode to regenerate the CaCO₃ by carbonation of CaO with the CO₂ contained in a gas fed to the reactor.

7. Method according to claim 6, wherein at least a fourth reactor is used to allow the combustion of the fuel gas in step i) in two chemical looping combustion sub-stages: a first sub-step wherein the solids containing CuO or iron oxides, are reduced with the fuel gas and a second sub-step where the reduced solids are oxidised with a comburent gas.

8. Method according to any one of claims 1 to 3 carried out in a moving bed shaft kiln of limestone where in the step iii) it is carried out a feeding of limestone to the top of a shaft of the moving bed shaft kiln while discharging CaO from the bottom of the shaft.

9. Method according to any one of claims 1 to 3 carried out in a double moving bed shaft kiln of limestone where in the step iii) it is carried out a feeding of limestone to the top of both shafts of the double moving bed shaft kiln while discharging CaO from the bottom of both shafts.

10. Method of capturing CO₂ from a gas comprising the steps of any one of the methods of claims 1-9.

11. Device to carry out the method of any one of claims 1 to 3 comprising:
i) two refractory-lined interconnected fluidised bed reactors, a first reactor and a second reactor comprising gas-solid separation devices to allow circulation of solids between the first and second reactor and means to keep separated the reaction atmospheres of said reactors;
ii) a fuel gas supply line (8) and a gas comburent line (9) connected to a bottom of the first reactor;
iii) an exhaust line (10,11) for flue gases connected to the gas-solid separation device of the first reactor:
iv) a first stand-pipe connected to a bottom of the gas-solid separation device of the first reactor to circulate the solids heated in the first reactor to the second reactor;
v) a hydrogen supply line (90) connected to a bottom of the second reactor;
vi) an exhaust line (7) for syngas connected to the gas-solid separation device of the second reactor;
vii) a second stand-pipe connected to a bottom of the gas-solid separation device of the second reactor to circulate the solids calcined in the second reactor to the first reactor; and
viii) a solid supply line of CaCO₃ connected to any point in the solid circulation loop and a solid purge line connected to the first reactor.

12. Device to carry out the method of claim 4 comprising:
i) two refractory-lined interconnected fluidised bed reactors, a first reactor and a second reactor comprising gas-solid separation devices to allow circulation of solids between the first and second reactor and means to keep separated the reaction atmospheres of the first and second reactors;
ii) a gas comburent supply line (9) connected to a bottom of the first reactor;
iii) an exhaust line (10,11) for flue gases connected to the gas-solid separation device of the first reactor;
iv) a first stand-pipe connected to a bottom of the gas-solid separation device of the first reactor to circulate the solids heated and oxidised in the first reactor to the second reactor;
v) a hydrogen supply line (90) connected to a bottom of the second reactor;
vi) an exhaust line (7) for syngas connected to the gas-solid separation device of the second reactor;
vii) a second stand-pipe connected to a bottom of the gas-solid separation device of the second reactor to circulate the solids calcined and reduced in the second reactor to the first reactor;
viii) a solid supply line of CaCO₃ and the solids containing CuO or iron oxides, connected to any point in the solid circulation loop, and a solid purge line connected to the first reactor to extract solids containing CaO and solids containing CuO or iron oxides; and
ix) a segregator or mechanical separator of the solids containing CuO or iron oxides from the solids containing CaO

13. Device to carry out the method of any one of claims 11 or 12, further comprising a third fluidised bed reactor acting as carbonator, receiving circulating solids from the second reactor and supplying solids to any point in the solid circulation loop between the two reactors.

## Patentansprüche

1. Verfahren zur Hydrierung und Kalzinierung von CaCO₃ in einem wärmeisolierten Behälter durch Umsetzen mit H₂ zur Erzeugung von CaO und einem Synthesegas, das mindestens H₂, CO, H₂O und CO₂ enthält, **gekennzeichnet durch** eine Abfolge von mindestens den folgenden aufeinanderfolgenden Schritten, die mindestens zweimal durchgeführt werden:
i) einen Schritt der Verbrennung eines Brennstoffs, um ein Feststoffbett, das mindestens CaO und CaCO₃ enthält, auf eine maximale Heiztemperatur zwischen 700 und 1100 °C zu erwärmen, bei einem Druck, der im Wesentlichen dem Gleichgewichtspartialdruck von reinem CO₂ auf CaO bei der maximalen Heiztemperatur entspricht;
ii) einen Schritt des Umsetzens des erwärmten Feststoffbetts, das mindestens CaO und CaCO₃ enthält, mit H₂ und Erlaubens einer adiabatischen Abkühlung um 50 bis 250 °C;
iii) einen Schritt des Auffüllens oder Regenerierens des Gehalts an CaCO₃ in den aus Schritt ii) resultierenden Feststoffen.

2. Verfahren nach Anspruch 1, wobei der Schritt ii) bei einem Betriebsdruck in atm durchgeführt wird, der innerhalb des Intervalls liegt, das sich aus der Multiplikation von 0,4-0,5 mal den Gleichgewichtspartialdruck von reinem CO₂ auf CaO mal die Gleichgewichtskonstante der reversen Wassergas-Shift-Reaktion ergibt, wobei die Gleichgewichtskonstanten bei einer beliebigen Temperatur im Temperaturintervall der kalzinierenden Feststoffe während ihrer adiabatischen Abkühlung in Schritt ii) berechnet werden.

3. Verfahren nach einem der Ansprüche 1 bis 3, wobei der Brennstoff in Schritt i) eine Auswahl aus H₂ oder einem C-Brennstoff und das Brenngas eine Auswahl aus Luft, angereicherter Luft oder reinem O₂ ist.

4. Verfahren nach einem der Ansprüche 1 bis 3, wobei das Feststoffbett, das CaO und CaCO₃ enthält, auch einen metallhaltigen Feststoff wie zum Beispiel Cu und Fe mit katalytischer Aktivität für die reverse Wassergas-Shift-Reaktion und mit Sauerstofftransportkapazität bei Oxidation zu CuO enthält, sodass ein chemischer Schleifenverbrennungsprozess unter Verwendung von CuO/Cu oder Eisenoxiden/Fe verwendet wird, um den Brennstoff in Schritt i) zu verbrennen.

5. Verfahren nach einem der Ansprüche 1 bis 4, wobei der Schritt iii) des Regenerierens des Gehalts an CaCO₃ in den aus Schritt ii) resultierenden Feststoffen durch Karbonisierung von CaO in Kontakt mit einem CO₂ enthaltenden Gas erzielt wird.

6. Verfahren nach Anspruch 5, wobei das Verfahren kontinuierlich unter Verwendung von mindestens drei parallel arbeitenden, feuerfest ausgekleideten Festbettreaktoren, die mindestens CaO und CaCO₃ enthalten, durchgeführt wird und das Umschalten von Gaseinlässen und -auslässen ermöglicht, um Druck- und Temperaturschwankungen auszugleichen, ferner **gekennzeichnet durch** einen synchronisierten zyklischen Wechsel zwischen den folgenden Betriebsarten in jedem Reaktor:
i) einer ersten Verbrennungsbetriebsart, bei der ein Brenngas innerhalb des Feststoff-Festbetts mit CaCO₃ enthaltenden Feststoffen verbrannt wird;
ii) einer zweiten Betriebsart mit reverser Wassergas-Shift, bei der das erwärmte Feststoff-Festbett mit CaCO₃ enthaltenden Feststoffen mit H₂ umgesetzt wird;
iii) einer dritten Karbonisierungsbetriebsart zum Regenerieren von CaCO₃ durch Karbonisierung von CaO mit CO₂, das in einem dem Reaktor zugeführten Gas enthalten ist.

7. Verfahren nach Anspruch 6, bei dem mindestens ein vierter Reaktor verwendet wird, um die Verbrennung des Brenngases in Schritt i) in zwei chemischen Schleifenverbrennungs-Teilstufen zu erlauben: einem ersten Teilschritt, bei dem die Feststoffe, die CuO oder Eisenoxide enthalten, mit dem Brenngas reduziert werden, und einem zweiten Teilschritt, bei dem die reduzierten Feststoffe mit einem Brenngas oxidiert werden.

8. Verfahren nach einem der Ansprüche 1 bis 3, das in einem Schwebebett-Schachtofen für Kalkstein durchgeführt wird, wobei in Schritt iii) eine Zuführung von Kalkstein zum oberen Ende eines Schachts des Doppel-Schwebebett-Schachtofens durchgeführt wird, während CaO vom unteren Ende des Schafts ausgeleitet wird.

9. Verfahren nach einem der Ansprüche 1 bis 3, das in einem Doppel-Schwebebett-Schachtofen für Kalkstein durchgeführt wird, wobei in Schritt iii) eine Zuführung von Kalkstein zum oberen Ende beider Schächte des Doppel-Schwebebett-Schachtofens durchgeführt wird, während CaO aus dem unteren Ende beiden Schächte ausgeleitet wird.

10. Verfahren zum Abscheiden von CO₂ aus einem Gas, das die Schritte eines der Verfahren nach Anspruch 1-9 umfasst.

11. Vorrichtung zur Durchführung des Verfahrens nach einem der Ansprüche 1 bis 3, die Folgendes umfasst:
i) zwei feuerfest ausgekleidete, miteinander verbundene Wirbelschichtreaktoren, einen ersten Reaktor und einen zweiten Reaktor, die Gas-Feststoff-Trennvorrichtungen umfassen, um einen Feststoffkreislauf zwischen dem ersten und dem zweiten Reaktor zu erlauben, sowie Mittel, um die Reaktionsatmosphären der Reaktoren getrennt zu halten;
ii) eine Brenngaszufuhrleitung (8) und eine Gasverbrennungsleitung (9), die mit einem unteren Ende des ersten Reaktors verbunden sind;
iii) eine Abgasleitung (10, 11) für Rauchgase, die mit der Gas-Feststoff-Trennvorrichtung des ersten Reaktors verbunden ist:
iv) ein erstes Standrohr, das mit einem unteren Ende der Gas-Feststoff-Trennvorrichtung des ersten Reaktors verbunden ist, um die im ersten Reaktor erwärmten Feststoffe in den zweiten Reaktor zu zirkulieren;
v) eine Wasserstoffzufuhrleitung (90), die mit dem unteren Ende des zweiten Reaktors verbunden ist;
vi) eine Abgasleitung (7) für Synthesegas, die mit der Gas-Feststoff-Trennvorrichtung des zweiten Reaktors verbunden ist;
vii) ein zweites Standrohr, das mit einem unteren Ende der Gas-Feststoff-Trennvorrichtung des zweiten Reaktors verbunden ist, um die im zweiten Reaktor kalzinierten Feststoffe in den ersten Reaktor zu zirkulieren; und
viii) eine Feststoffzufuhrleitung für CaCO₃, die mit einer beliebigen Stelle im Feststoffkreislauf verbunden ist, und eine Feststoffspülleitung, die mit dem ersten Reaktor verbunden ist.

12. Vorrichtung zur Durchführung des Verfahrens nach Anspruch 4, die Folgendes umfasst:
i) zwei feuerfest ausgekleidete, miteinander verbundene Wirbelschichtreaktoren, einen ersten Reaktor und einen zweiten Reaktor, die Gas-Feststoff-Trennvorrichtungen umfassen, um einen Feststoffkreislauf zwischen dem ersten und dem zweiten Reaktor zu erlauben, sowie Mittel, um die Reaktionsatmosphären des ersten und des zweiten Reaktors getrennt zu halten;
ii) eine Gasverbrennungsleitung (9), die mit einem unteren Ende des ersten Reaktors verbunden ist;
iii) eine Abgasleitung (10, 11) für Rauchgase, die mit der Gas-Feststoff-Trennvorrichtung des ersten Reaktors verbunden ist;
iv) ein erstes Standrohr, das mit einem unteren Ende der Gas-Feststoff-Trennvorrichtung des ersten Reaktors verbunden ist, um die im ersten Reaktor erwärmten und oxidierten Feststoffe in den zweiten Reaktor zu zirkulieren;
v) eine Wasserstoffzufuhrleitung (90), die mit dem unteren Ende des zweiten Reaktors verbunden ist;
vi) eine Abgasleitung (7) für Synthesegas, die mit der Gas-Feststoff-Trennvorrichtung des zweiten Reaktors verbunden ist;
vii) ein zweites Standrohr, das mit einem unteren Ende der Gas-Feststoff-Trennvorrichtung des zweiten Reaktors verbunden ist, um die im zweiten Reaktor kalzinierten und reduzierten Feststoffe in den ersten Reaktor zu zirkulieren;
viii) eine Feststoffzufuhrleitung für CaCO₃ und die CuO oder Eisenoxide enthaltenden Feststoffe, die mit einer beliebigen Stelle der Feststoffkreislaufschleife verbunden ist, und eine Feststoff-Spülleitung, die mit dem ersten Reaktor verbunden ist, um CaO und CuO oder Eisenoxide enthaltende Feststoffe zu extrahieren; und
ix) einen Separator oder mechanischen Abscheider für die CuO oder Eisenoxide enthaltenden Feststoffe von den CaO enthaltenden Feststoffen.

13. Vorrichtung zur Durchführung des Verfahrens nach einem der Ansprüche 11 oder 12, die ferner einen dritten Wirbelschichtreaktor umfasst, der als Karbonisator fungiert, zirkulierende Feststoffe aus dem zweiten Reaktor aufnimmt und Feststoffe einer beliebigen Stelle in der Feststoffkreislaufschleife zwischen den zwei Reaktoren zuführt.

## Revendications

1. Procédé d'hydrogénation et de calcination de CaCO₃ dans un récipient thermiquement isolé par réaction de celui-ci avec de l'H₂, pour produire du CaO et un gaz de synthèse contenant au moins de l'H₂, du CO, de l'H₂O et du CO₂, **caractérisé par** une séquence d'au moins les étapes consécutives suivantes effectuées au moins deux fois :
i) une étape de combustion d'un combustible pour chauffer un lit de solides contenant au moins du CaO et du CaCO₃ à une température de chauffage maximale comprise entre 700 et 1 100 °C, à une pression qui est essentiellement la pression partielle d'équilibre du CO₂ pur sur du CaO à la température de chauffage maximale ;
ii) une étape de réaction avec de l'H₂ du lit chauffé de solides contenant au moins du CaO et du CaCO₃, tout en permettant leur refroidissement adiabatique à hauteur de 50 à 250 °C ;
iii) une étape de reconstitution ou de régénération de la teneur en CaCO₃ dans les solides résultant de l'étape ii).

2. Procédé selon la revendication 1, dans lequel l'étape ii) est effectuée à une pression de fonctionnement, en atm, qui se situe dans l'intervalle résultant de la multiplication de 0,4 à 0,5 par la pression partielle d'équilibre du CO₂ pur sur du CaO par la constante d'équilibre de la réaction inverse de la conversion de gaz à l'eau, les constantes d'équilibre étant calculées à une température quelconque dans l'intervalle des températures des solides en cours de calcination pendant leur refroidissement adiabatique à l'étape ii).

3. Procédé selon l'une quelconque des revendications 1 à 3, dans lequel le combustible à l'étape i) est un choix entre H₂ et un combustible à base de C et le comburant un choix entre de l'air, de l'air enrichi ou de l'O₂ pur.

4. Procédé selon l'une quelconque des revendications 1 à 3, dans lequel le lit de solides contenant du CaO et du CaCO₃ contient également un solide contenant du métal tel que Cu et Fe, présentant une activité catalytique pour la réaction inverse de la conversion de gaz à l'eau et présentant une capacité de transport de l'oxygène lorsqu'il est oxydé en CuO ou en oxydes de fer, de sorte qu'un processus de combustion chimique en boucle utilisant CuO/Cu ou oxydes de fer/Fe est utilisé pour brûler le combustible à l'étape i).

5. Procédé selon l'une quelconque des revendications 1 à 4, dans lequel l'étape iii) de régénération de la teneur en CaCO₃ dans les solides résultant de l'étape ii) est réalisée par carbonatation de CaO au contact d'un gaz contenant du CO₂.

6. Procédé selon la revendication 5, le procédé étant effectué en continu à l'aide d'au moins trois réacteurs à lit à garnissage et à revêtement réfractaire contenant au moins du CaO et du CaCO₃ fonctionnant en parallèle et permettant la commutation des entrées et sorties de gaz pour rendre possibles des modulations de pression et de température, **caractérisé en outre par** un cycle synchronisé entre les modes de fonctionnement suivants dans chaque réacteur :
i) un premier mode de fonctionnement en combustion brûlant un gaz combustible à l'intérieur du lit à garnissage de solides renfermant des solides contenant du CaCO₃ ;
ii) un deuxième mode de fonctionnement en conversion de gaz à l'eau inverse faisant réagir avec de l'H₂ le lit à garnissage chauffé de solides renfermant des solides contenant du CaCO₃ ;
iii) un troisième mode de fonctionnement en carbonatation pour régénérer le CaCO₃ par carbonatation de CaO avec le CO₂ contenu dans un gaz alimentant le réacteur.

7. Procédé selon la revendication 6, dans lequel au moins un quatrième réacteur est utilisé pour permettre la combustion du gaz combustible à l'étape i) en deux sous-étages de combustion à boucle de produit chimique : une première sous-étape dans laquelle les solides, contenant du CuO ou des oxydes de fer, sont réduits avec le gaz combustible et une seconde sous-étape où les solides réduits sont oxydés avec un gaz comburant.

8. Procédé selon l'une quelconque des revendications 1 à 3 effectué dans un four pour calcaire à puits à lit mobile où à l'étape iii) on effectue une alimentation en calcaire par la partie supérieure d'un puits du four à puits à lit mobile tout en faisant sortir du CaO de la partie inférieure du puits.

9. Procédé selon l'une quelconque des revendications 1 à 3 effectué dans un four pour calcaire à double puits à lit mobile où à l'étape iii) on effectue une alimentation en calcaire par la partie supérieure des deux puits du four à double puits à lit mobile tout en faisant sortir du CaO de la partie inférieure des deux puits.

10. Procédé de capture de CO₂ d'un gaz comprenant les étapes de l'un quelconque des procédés selon les revendications 1 à 9.

11. Dispositif pour effectuer le procédé selon l'une quelconque des revendications 1 à 3 comprenant :
i) deux réacteurs à lit fluidisé à revêtement réfractaire raccordés entre eux, un premier réacteur et un second réacteur comprenant des dispositifs de séparation gaz-solides pour permettre la circulation de solides entre le premier réacteur et le second réacteur et un moyen pour maintenir séparées les atmosphères de réaction desdits réacteurs ;
ii) une conduite d'apport de gaz combustible (8) et une conduite de comburant gazeux (9) raccordées à une partie inférieure du premier réacteur ;
iii) une conduite d'évacuation (10, 11) pour des gaz de combustion raccordée au dispositif de séparation gaz-solides du premier réacteur :
iv) un premier tuyau vertical raccordé à une partie inférieure du dispositif de séparation gaz-solides du premier réacteur pour faire circuler les solides chauffés dans le premier réacteur vers le second réacteur ;
v) une conduite d'apport d'hydrogène (90) raccordée à une partie inférieure du second réacteur :
vi) une conduite d'évacuation (7) pour du gaz de synthèse raccordée au dispositif de séparation gaz-solides du second réacteur ;
vii) un second tuyau vertical raccordé à une partie inférieure du dispositif de séparation gaz-solides du second réacteur pour faire circuler les solides calcinés dans le second réacteur vers le premier réacteur ; et
viii) une conduite d'apport de solides pour du CaCO₃ raccordée à un point quelconque de la boucle de circulation de solides et une conduite de purge de solides raccordée au premier réacteur.

12. Dispositif pour effectuer le procédé selon la revendication 4 comprenant :
i) deux réacteurs à lit fluidisé à revêtement réfractaire raccordés entre eux, un premier réacteur et un second réacteur comprenant des dispositifs de séparation gaz-solides pour permettre la circulation de solides entre le premier réacteur et le second réacteur et un moyen pour maintenir séparées les atmosphères de réaction des premier et second réacteurs ;
ii) une conduite d'apport de comburant gazeux (9) raccordée à une partie inférieure du premier réacteur :
iii) une conduite d'évacuation (10, 11) pour des gaz de combustion raccordée au dispositif de séparation gaz-solides du premier réacteur ;
iv) un premier tuyau vertical raccordé à une partie inférieure du dispositif de séparation gaz-solides du premier réacteur pour faire circuler les solides chauffés et oxydés dans le premier réacteur vers le second réacteur ;
v) une conduite d'apport d'hydrogène (90) raccordée à une partie inférieure du second réacteur :
vi) une conduite d'évacuation (7) pour du gaz de synthèse raccordée au dispositif de séparation gaz-solides du second réacteur ;
vii) un second tuyau vertical raccordé à une partie inférieure du dispositif de séparation gaz-solides du second réacteur pour faire circuler les solides calcinés et réduits dans le second réacteur vers le premier réacteur ;
viii) une conduite d'apport de solides pour du CaCO₃ et les solides contenant du CuO ou des oxydes de fer, raccordée à un point quelconque de la boucle de circulation de solides, et une conduite de purge de solides raccordée au premier réacteur pour extraire des solides contenant du CaO et des solides contenant du CuO ou des oxydes de fer ; et
ix) un ségrégateur ou un séparateur mécanique des solides contenant du CuO ou des oxydes de fer des solides contenant du CaO.

13. Dispositif pour effectuer le procédé selon l'une quelconque des revendications 11 ou 12, comprenant en outre un troisième réacteur à lit fluidisé servant de carbonateur, recevant des solides en circulation provenant du deuxième réacteur et apportant des solides à un point quelconque de la boucle de circulation de solides entre les deux réacteurs.
